(19) Europäisches Patentamt
European Patent Office
Office européen des brevets

(11) EP 2 979 437 B1

(12) **FASCICULE DE BREVET EUROPEEN**

(45) Date de publication et mention de la délivrance du brevet:
**30.11.2016 Bulletin 2016/48**

(21) Numéro de dépôt: **14721440.7**

(22) Date de dépôt: **24.03.2014**

(51) Int Cl.:
***H04M 3/56*** *(2006.01)* ***G10L 19/24*** *(2013.01)*

(86) Numéro de dépôt international:
**PCT/FR2014/050684**

(87) Numéro de publication internationale:
**WO 2014/154989 (02.10.2014 Gazette 2014/40)**

(54) **MIXAGE OPTIMISÉ DE FLUX AUDIO CODÉS SELON UN CODAGE PAR SOUS-BANDES**

OPTIMIERTES MISCHEN VON DURCH SUBBAND-CODIERUNG CODIERTEN AUDIOSTRÖMEN

OPTIMISED MIXING OF AUDIO STREAMS ENCODED BY SUB-BAND ENCODING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2013 FR 1352677**

(43) Date de publication de la demande:
**03.02.2016 Bulletin 2016/05**

(73) Titulaire: **Orange**
**75015 Paris (FR)**

(72) Inventeurs:
- **NAGLE, Arnault**
**F-22300 Lannion (FR)**
- **LAMBLIN, Claude**
**F-22730 Tregastel (FR)**
- **KOVESI, Balazs**
**F-Lannion 22300 (FR)**

(74) Mandataire: **Froger, Marie-Hélène**
**Orange**
**IMTW/OLPS/IPL/PAT**
**Orange Gardens**
**44 Avenue de la République**
**CS 50010**
**92326 Châtillon Cedex (FR)**

(56) Documents cités:
**US-A1- 2008 101 577 US-B1- 7 619 995**

- **HIWASAKI Y ET AL: "ITU-T G.711.1: extending G.711 to higher-quality wideband speech", IEEE COMMUNICATIONS MAGAZINE, IEEE SERVICE CENTER, PISCATAWAY, US, vol. 47, no. 10, 1 octobre 2009 (2009-10-01), pages 110-116, XP011283324, ISSN: 0163-6804, DOI: 10.1109/MCOM.2009.5273817**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention se rapporte aux traitements d'une pluralité de flux audio codés comme le mixage, le multiplexage de signaux, le transcodage, le décodage, les traitements dans le domaine codé et autres traitements particuliers.

Ces traitements peuvent être effectués dans des équipements de type ponts de conférence à mixage et / ou multiplexage, terminaux de communication, passerelles de communication, etc ...

### ÉTAT DE LA TECHNIQUE ANTÉRIEURE

L'invention peut ainsi être mise en oeuvre dans un contexte d'audioconférence tant sur réseaux synchrones (RNIS, RTC, etc...) que sur réseaux asynchrones (IP, ATM, FRAME RELAY, etc...). Les flux peuvent provenir de réseaux hétérogènes et avoir subi des traitements différents (par exemple avoir été codés par des systèmes de compression audio différents).

L'invention concerne en particulier les flux obtenus par des algorithmes de codage en sous-bandes tels que les codeurs normalisés UIT-T G.711.1 et G.722. Elle vise en particulier les traitements de type mixage et/ou de réplication des flux audio.

Les applications les plus courantes pour de tels traitements sont les communications multi-parties telles que l'audioconférence ou la visioconférence.

Deux configurations de communication sont en général considérées : une utilisant une architecture maillée avec des terminaux en liaison point à point, une autre utilisant une architecture centralisée avec une unité de contrôle multipoint (Multipoint Control Unit : MCU en anglais).

Dans le cas d'une architecture centralisée, l'unité de contrôle comporte un pont - point central qui soit « additionne » les flux audio (principe du mixage) soit duplique les flux audio (principe de la réplication). Deux grandes catégories de pont existent donc : le pont à mixage et le pont répliquant.

Le principe de fonctionnement du pont répliquant est illustré en **Figure 1a.** Chaque terminal émetteur ($T_0$, ..., $T_j$, ..., $T_{N-1}$) envoie au pont P son flux audio $Be_j$, obtenu par codage (COD.) de son signal d'entrée $Se_j$, qu'il soit de type mono, stéréo, multicanaux ...

Le pont transmet à chaque terminal récepteur ($T_i$) les flux ($Be_0$, ..., $Be_{i-1}$, $Be_{i+1}$, ..., $Be_{N-1}$) des terminaux émetteurs. A partir des N signaux d'entrée reçus, pour chaque sortie *i,* le pont transmet, les (*N*-1) flux reçus des entrées ($E_j$) ($0 \leq j < N, j \neq i$) au terminal *i*. Dans la Figure 1a, le terminal $T_i$ reçoit *N-1* flux du pont correspondant aux *N-1* autres terminaux ($T_0$, ..., $T_{i-1}$, $T_{i+1}$, ..., $T_{N-1}$).

Le pont se contente donc de dupliquer les flux, de les multiplexer (MUX.), pour les transmettre aux terminaux respectifs via son module de sortie $S_i$. Ainsi les avantages de ce type de pont sont qu'il n'a pas besoin de ressources logicielles importantes et peut donc supporter de nombreuses conférences, qu'il n'a pas besoin de d'effectuer des opérations de codage et décodage des flux audio, ce qui évite la perte de qualité audio et la génération d'un retard supplémentaire.

Les terminaux qui reçoivent les flux dupliqués peuvent gérer indépendamment la spatialisation de ces flux si besoin.

En contrepartie, les ressources logicielles et les capacités de calculs des terminaux doivent être plus importantes pour traiter les flux reçus en les démultiplexant (DEMUX.), en les décodant (DECOD.) et en les mixant (MIX.) et au besoin en les spatialisant pour obtenir le signal mixé $S_{Mi}$. Ainsi le nombre de participants à une conférence peut être limité par les capacités des terminaux.

Suivant le nombre de flux audio à transmettre dans le flux descendant vers un terminal, la bande passante correspondante peut être importante. Les terminaux doivent avoir le même type de codeurs/décodeurs pour gérer les flux, et donc potentiellement posséder un ensemble de codeurs/décodeurs important.

Le principe de fonctionnement d'un pont de mixage est illustré à la **Figure 1b** et est maintenant décrit.

Chaque terminal émetteur ($T_0$, ..., $T_j$, ..., $T_{N-1}$) envoie au pont P son flux audio $Be_j$, obtenu par codage (COD.) de son signal d'entrée $Se_j$, qu'il soit de type mono, stéréo, multicanaux, ...

Le pont effectue le mixage (MIX.) des flux puis le routage vers les terminaux concernés. A partir des N signaux d'entrée reçus, le pont prépare les N signaux de sortie à transmettre par sommation. Ainsi la somme des (*N*-1) signaux des entrées ($E_j$) ($0 \leq j < N, j \neq i$) est dirigée vers la sortie $S_i$ ($0 \leq i < N$). Pour cela, le pont audio effectue d'abord le décodage (DECOD.) des flux binaires entrants, puis pour chaque sortie *i*, les (*N*-1) signaux décodés des entrées ($E_j$) ($0 \leq j < N, j \neq i$) sont additionnés et ce signal mixé est ré-encodé (COD.) avant d'être transmis au terminal *i*. Le terminal i obtient le signal mixé décodé $S_{Mi}$ par décodage (DECOD.) du flux $Bs_i$. Par la suite, nous appelons flux mixé le signal ré-encodé.

Dans la figure 1b, le terminal i reçoit le flux mixé $Bs_i$ par le pont P à partir des N-1 flux ($Be_0$, ..., $Be_{i-1}$, $Be_{i+1}$, ...,

$Be_{N-1}$) reçus et décodés des autres terminaux ($T_0$, ..., $T_{i-1}$, $T_{i+1}$, ..., $T_{N-1}$).

A l'inverse du principe du pont répliquant, ce principe concentre les capacités et ressources logicielles sur le pont de mixage et non plus dans les terminaux récepteurs. L'entité centrale intelligente permet de gérer un grand nombre de participants. Le bloc de spatialisation peut être intégré au pont de façon à gérer une scène sonore commune entre tous les participants. La bande passante nécessaire pour la transmission du flux mixé vers les terminaux n'a pas besoin d'être importante même avec un grand nombre de participants. Les terminaux n'ont pas besoin d'avoir le même type de codec du moment que le pont possède les codecs nécessaires.

En contrepartie, les traitements et les ressources nécessaires sont donc plus importantes sur le pont. Il est plus difficile de gérer indépendamment une spatialisation dans les terminaux et la qualité audio est moins bonne du fait des opérations de décodage et de codage effectuées sur le pont.

Dans une architecture de téléconférence maillée les différents terminaux sont en communication point à point. Dans le cas classique, les ($N$-1) flux audio arrivant à un terminal sont complètement décodés avant d'être mixés dans le domaine temporel. On retrouve les avantages et inconvénients pour les terminaux d'un pont répliquant.

Une méthode classique de combinaison des flux audio dans le domaine du codage par sous-bande est décrite par exemple dans l'appendice I de la recommandation UIT-T G.722 ("7 kHz audio-coding within 64 kbit/s", Sep. 2012). Une description du codec G.722 sera également donnée ultérieurement.

Pour décrire cette méthode, on suppose un pont avec N voies d'entrée (recevant N flux binaires hiérarchiques codés par le G.722 à 64 kbit/s), on note pour chaque voie $j$ ($0 \leq j < N$):

- $Be_j^l$ le flux binaire sous-bande basse entrant à 48 kbit/s (composé de la couche coeur à 32 kbit/s et de deux couches d'amélioration de 8 kbit/s chacune)
- $Be_j^h$ le flux binaire sous-bande haute entrant à 16 kbit/s
- $s_j^l$ le signal reconstruit de la sous-bande basse obtenu en décodant le flux $Be_j^l$
- $s_j^h$ le signal reconstruit de la sous-bande haute obtenu en décodant le flux $Be_j^h$ On note aussi pour chaque voie de sortie ($0 \leq i < N$):
- $Bs_i^l$ le flux binaire sous-bande basse sortant (composé de la couche coeur et de deux couches d'amélioration)
- $Bs_i^h$ le flux binaire sous-bande haute sortant

Dans cette méthode, la procédure de combinaison des flux binaires ($Bs_i^l$, $Bs_i^h$) vers une pluralité de terminaux $Ti$($0 \leq i < N$) est la suivante :

A. Obtention des N signaux sous-bande basse $s_j^l$ par décodage de flux binaires sous-bande basse $Be_j^l$, $0 \leq j < N$

B. Obtention des N signaux sous-bande haute $s_j^h$ par décodage de flux binaires sous-bande haute $Be_j^h$, $0 \leq j < N$

C. Obtention du flux binaire sous-bande basse ($Bs_i^l$) à transmettre vers un terminal $Ti$ ($0 \leq i < N$) par:

C1. Addition de $N$-1 signaux reconstruits de la sous-bande basse : $S_i^l = \Sigma s_j^l$ ; $0 \leq j < N, j\ i$

C2. Codage par l'encodeur sous-bande basse du G.722 (MICDA (Modulation par Impulsions et Codage Différentiel Adaptatif) sur 6 bits) de ce signal somme $S_i^l$ pour obtenir le flux binaire de sortie sous-bande basse $Bs_i^l$

D. Obtention du flux binaire sous-bande haute ($Bs_i^h$) à transmettre vers un terminal $Ti$ ($0 \leq i < N$) par:

D1 : Addition de $N$-1 signaux reconstruits de la sous-bande haute : $S_i^h = \Sigma s_j^h$ ; $0 \leq j < N, j \neq i$

D2. Codage par l'encodeur sous-bande haute du G.722 (MICDA sur 2 bits) de ce signal somme $S_i^h$ pour obtenir le flux binaire de sortie sous-bande haute $Bs_i^h$.

Cette méthode permet d'obtenir une bonne qualité puisque tous les flux audio dans toutes les sous-bandes de fréquence sont pris en compte lors du mixage des flux. Cependant, cette bonne qualité se fait au détriment d'une grande complexité de traitement, soit au niveau du pont de mixage, soit au niveau du terminal selon la configuration du réseau.

Pour réduire la complexité du mixage de flux codés une technique par exemple décrite dans le document intitulé "Tandem-free VoIP conferencing: a bridge to next-generation networks" des auteurs Smith, P.J., Kabal, P., Blostein M.L., Rabipour, R dans IEEE Communications Magazine vol. 41, N°5, May 2003, consiste à restreindre le nombre de flux retransmis au niveau du multipoint et donc à n'effectuer le mixage que sur une partie des signaux reçus.

Plusieurs stratégies existent pour sélectionner les flux codés qui sont pris en compte : par exemple, seuls les flux avec une intensité plus forte (critère LT en anglais pour "Loudest Talker") sont considérés. Un autre critère non pas énergétique mais temporel dit FCFS (pour "First Come First Serve" en anglais) utilise un classement des voies selon l'ordre de prise de parole des participants ; ce critère s'appuie sur une détection d'activité vocale. Par exemple, dans le cas de transmission des flux audio dans des paquets selon le protocole RTP avec extension de l'entête telle que décrite dans RFC 6464 (J. Lennox, E. Ivov, E. Marocco, "A Real-time Transport Protocol (RTP) Header Extension for Client-to-Mixer Audio Level Indication", RFC 6464, December 2011), l'entête comprend une indication du niveau du flux audio et éventuellement un indicateur d'activité vocale, ce qui facilite cette sélection du flux dans un équipement de mixage (tel qu'un pont).

Selon les systèmes, le nombre de flux sélectionnés peut être fixe ou variable. En général, on considère que la sélection de deux à trois flux permet un bon compromis entre réduction de complexité et maintien d'un bon niveau de participation. Le critère FCFS utilise les décisions DAV (pour "Détection d'activité vocale", en anglais VAD pour "Voice Activity Detector") tandis que le critère LT nécessite une mesure de la puissance du signal ou de son énergie.

La réduction du nombre d'entrées est aussi utilisée dans le pont répliquant pour diminuer le débit descendant vers les terminaux distants et diminuer la complexité du traitement dans ces terminaux.

Lorsqu'une sélection des flux est effectuée (flux actifs, flux les plus énergétiques, ...), la procédure de combinaison des flux selon l'état de l'art est la suivante :

A'. Sélection selon un des critères décrits ci-dessus de l'ensemble *V'*(des indices) des *N'* voies d'entrée

B'. Obtention des *N'* signaux sous-bande basse $s_j^l$ par décodage de flux binaires sous-bande basse $Be_j^l, j \in V'$

C'. Obtention des *N'* signaux sous-bande haute $s_j^h$ par décodage de flux binaires sous-bande haute $Be_j^h, j \in V'$

D'. Obtention du flux binaire sous-bande basse $(Bs_i^l)$ à transmettre vers un terminal *Ti* (0≤*i*<*N*) par:

- D'1. si $i \in V'$, addition de *N'*-1 signaux reconstruits de la sous-bande basse : $S_i^l=\Sigma s_j^l$ ; $j \in V'-\{i\}$; sinon $(i \notin V')$ $S_i^l=\Sigma s_j^l$ ; $j \in V'$
- D'2. Codage par l'encodeur sous-bande basse du G.722 (MICDA sur 6 bits) de ce signal somme $S_i^l$ pour obtenir le flux binaire de sortie sous-bande basse $Bs_i^l$

E'. Obtention du flux binaire sous-bande haute $(Bs_i^h)$ à transmettre vers un terminal *Ti* (0≤<*N*) par:

- E'1 : si $i \in V'$, Addition de *N'* signaux reconstruits de la sous-bande haute : $S_i^h=\Sigma s_j^h$ ; $j \in V'$-{i}; sinon $(i \notin V')$ $S_i^h=\Sigma s_j^h$ ; $j \in V'$
- E'2. Codage par l'encodeur sous-bande haute du G.722 (MICDA sur 2 bits) de ce signal somme $S_i^h$ pour obtenir le flux binaire de sortie sous-bande haute $Bs_i^h$

La réduction de complexité apportée par la sélection d'un sous-ensemble de voies d'entrée à combiner dépend de la taille *N'* de l'ensemble des voies à combiner. Aux étapes B' et C', le nombre de décodage peut être réduit de *N* à *N'*; aux étapes D'1 et E'1, le nombre d'additions/ de sommations est réduit de 2*N* (ou *N*(*N*-1)) à 2*N'* (ou *N'*(*N'*-1)) comme expliqué plus loin. De plus, les signaux $S_i^l$ *et* $S_i^l$ étant les mêmes pour les sorties $i$, $i \notin V'$, le nombre de ré-encodage aux étapes D'2 et E'2 peut être réduit de *N* à *N'*+1.

Cette technique permet de réduire en effet la complexité de traitement. Cependant, le mode de sélection des flux à mixer ne permet pas nécessairement d'obtenir la meilleure qualité du flux mixé en termes de représentativité des intervenants.

D'autre part, si on s'intéresse aux flux audio susceptibles d'être mixés, on remarque que ceux-ci peuvent être codés selon différents formats de codage et sur des largeurs de bande de fréquence différentes.

Les codecs HD ("Haute Définition") sont en effet capables de compresser efficacement la voix sur une large bande de fréquence. Ils permettent de transmettre la voix en qualité HD encodée sur une plage de fréquence allant de 50Hz à 7kHz (la bande élargie).

La voix HD vise à fournir une qualité et un confort d'écoute inconnus jusqu'à présent sur les réseaux téléphoniques classiques. Ses avantages pour les usagers sont d'une part fonctionnels; l'élargissement de la bande de fréquence accroissant l'intelligibilité, le confort d'écoute favorisant les conversations longues; mais également d'ordre émotionnel. Le rendu de la majeure partie du spectre de parole assure en effet la fidélité de la voix et une véritable sensation de présence. A terme, la voix "super-HD" (superwideband SWB) jusqu'à 15kHz voire "Hifi" (ou fullband FB) sur la totalité de la bande de fréquences audibles [20Hz-20kHz] est envisagée.

La Voix HD requiert une chaîne de communication compatible de bout en bout, c'est-à-dire du microphone à l'écouteur du terminal distant. Elle s'appuie sur des formats de codage garantissant la qualité bande élargie et qui étant normalisés assurent l'interopérabilité entre les différents éléments de la chaîne.

Dans l'industrie des télécommunications, trois formats HD sont particulièrement employés: le codeur UIT-T G.722 décrit par exemple dans le document "Rec. ITU-T G.722, 7 kHz audio-coding within 64 kbit/s, Sep. 2012", le codeur UIT-T G.711.1 décrit par exemple dans le document "Rec. IUT-T G.711.1, Wideband embedded extension for G.711 pulse code modulation, 2008", pour les communications en bande élargie sur réseaux fixes et le codeur 3GPP AMR-WB décrit par exemple dans le document "3GPP TS 26.190 V10.0.0 (2011-03) 3rd Generation Partnership Project; Technical Spécification Group Services and System Aspects; Speech codec speech processing functions; Adaptive Multi-Rate - Wideband (AMR-WB) speech codec; Transcoding functions (Release 10)" pour celles sur réseaux mobiles. Comme autres codeurs HD, on peut citer le codeur UIT-T G.729.1, extension hiérarchique du codeur bande étroite G.729. Schématiquement la mise sur le marché de la Voix HD fait appel à deux composantes. Il faut tout d'abord un réseau de télécommunication compatible avec les codeurs en bande élargie - autrement dit transparent à ces formats de codage - et à Qualité de Service garantie. Il faut aussi des terminaux qui embarquent le codeur bande élargie, inter-opèrent avec le réseau et dont les caractéristiques acoustiques préservent la qualité Voix HD.

Le dynamisme du secteur de la communication multimédia et l'hétérogénéité des réseaux, accès et terminaux ont engendré une prolifération de formats de compression. Il existe de nombreuses méthodes de compression des signaux media pour réduire le débit tout en maintenant une bonne qualité.

La présence dans les chaînes de communication de différents formats de compression nécessite plusieurs codages en cascade (transcodage). Le transcodage est nécessaire lorsque dans une chaîne de transmission, une trame de signal compressée émise par un codeur ne peut plus poursuivre son chemin, sous ce format. Le transcodage permet de convertir cette trame sous un autre format compatible avec la suite de la chaîne de transmission. La solution la plus élémentaire (et la plus courante à l'heure actuelle) est la mise bout à bout d'un décodeur et d'un codeur. La trame compressée arrive sous un premier format, elle est décompressée. Ce signal décompressé est alors compressé à nouveau sous un second format accepté par la suite de la chaîne de communication. Cette mise en cascade d'un décodeur et d'un codeur, est appelée un tandem.

Il faut noter que lors d'un tandem, des codeurs codant des gammes de fréquence différentes peuvent être mis en cascade. Ainsi, un codeur bande élargie peut être amené à coder un contenu audio de bande plus restreinte que la bande élargie. Par exemple, le contenu à coder par les codeurs HD fixes (G.722 et G.711.1) bien qu'échantillonné à 16 kHz peut n'être qu'en bande téléphonique car codé précédemment par un codeur bande étroite (comme le standard UIT-T G.711). Il se peut aussi que la qualité limitée de l'acoustique du terminal émetteur ne permette pas de couvrir toute la bande élargie.

On voit donc que la bande audio d'un flux codé par un codeur fonctionnant sur des signaux échantillonnés à une fréquence d'échantillonnage donnée peut être bien plus restreinte que celle supportée par le codeur. Or dans bien des applications, la connaissance de la bande audio d'un contenu à traiter - en particulier la prise en compte de la présence d'une bande de fréquence prédéterminée dans le flux codé (la présence d'une bande de fréquence indiquant qu'il y a un contenu pertinent) - est utile.

Le brevet US7,619,995B1 décrit des transcodeurs et mixeurs pour le mixage de signaux à bande large, le mixage est simplifié par le mixage individuel des sous-bandes inférieures et supérieures.

Ainsi, il est important de préserver le contenu Haute Fréquence lorsque celui-ci existe dans un flux audio pour améliorer le confort d'écoute d'un auditeur.

Il existe donc un besoin de diminuer la complexité du mixage d'une pluralité de flux audio tout en préservant un confort d'écoute appréciable par un auditeur recevant un flux mixé.

## EXPOSÉ DE L'INVENTION

La présente invention vient améliorer la situation.

Elle propose à cet effet, un procédé de mixage d'une pluralité de flux audio codés selon un codage en sous-bandes de fréquence, comportant les étapes suivantes:

- décodage d'une partie des flux codés sur au moins une première sous-bande de fréquence;
- addition des flux ainsi décodés pour former au moins un premier flux mixé.

Le procédé est tel qu'il comporte les étapes de:

- détection, sur au moins une deuxième sous-bande de fréquence différente de la au moins une première sous-bande, de présence d'une bande de fréquence prédéterminée dans la pluralité de flux audio codés;
- addition des flux audio décodés pour lesquels la présence de la bande de fréquence prédéterminée a été détectée, sur la dite au moins une deuxième sous-bande, pour former au moins un deuxième flux mixé.

Ainsi, le nombre de flux à mixer sur la deuxième sous-bande de fréquence est réduit puisque seuls les flux contenant une bande de fréquence prédéterminée sont retenus. Le mixage selon ce procédé a une complexité réduite tout en permettant de préserver par exemple le contenu HD des flux pour une qualité optimale des flux combinés.

Les différents modes particuliers de réalisation mentionnés ci-après peuvent être ajoutés indépendamment ou en combinaison les uns avec les autres, aux étapes du procédé de mixage défini ci-dessus.

Dans un mode de réalisation particulier, le procédé comprend en outre une étape de présélection des flux audio codés selon un critère prédéterminé, avant l'étape de détection.

La présélection permet de réduire le nombre de flux à mixer et donc de diminuer la complexité du mixage. De plus, la vérification de la présence de la bande de fréquence s'effectue alors sur un nombre restreint de flux, ce qui diminue encore la complexité du procédé.

Le critère prédéterminé peut par exemple être un critère d'énergie et/ou d'activité vocale.

Dans une application possible sur un pont central (MCU) gérant plusieurs terminaux, le procédé comporte en outre une étape de ré-encodage des flux mixés.

Dans un mode de réalisation particulier, l'étape de décodage s'effectue sur des sous-bandes de fréquence basses et la bande de fréquence prédéterminée de l'étape de détection est une bande de fréquence supérieure auxdites sous-bandes de fréquence basses.

Ceci est notamment applicable dans les codeurs sous-bandes qui permettent d'obtenir du contenu HD. La présence de ce contenu HD dans un flux codé conditionne sa sélection pour constituer le flux audio HD mixé à transmettre. Ceci est aussi applicable à des codeurs opérant à des fréquences d'échantillonnage supérieures à 16 kHz, tel que le codeur super-HD de France Télécom (à quatre sous-bandes codées par la technologie MICDA), ou le codeur OPUS décrit dans la RFC6716 de l'IETF (Valin, JM., Vos, K., and T. Terriberry, "Definition of the Opus Audio Codec", RFC 6716, September 2012.) qui comporte un mode hybride où les basses fréquences (<8 kHz) sont codées par une technologie de codage à prédiction linéaire et les hautes fréquences par une technologie de codage par transformée.

Dans un mode de réalisation, la présence d'une bande de fréquence prédéterminée dans un flux codé s'effectue par une comparaison d'énergie, dans les différentes sous-bandes de fréquence, des flux audio décodés.

Ceci est applicable dans tout type de codage sous-bandes comme le codage de type G.722 ou G.711.1. En contrepartie, cette technique nécessite un décodage des flux avant l'étape de détection.

Pour certaines technologies de codage, des méthodes de détection de la présence ou non d'une bande de fréquence (contenu pertinent) qui ne nécessitent pas un décodage complet des flux ont été proposées. Par exemple, pour les codeurs par transformée ou en-sous-bandes tels les codeurs MPEG (e.g. MP3, AAC, ...) dont le flux codé comporte des coefficients spectraux codés, comme par exemple, les coefficients MDCT dans le codeur MP3, le document "Liaoyu Chang, Xiaoqing Yu, Haiying Tan, Wanggen Wan, Research and Application of Audio Feature in Compressed Domain, IET Conference on Wireless, Mobile and Sensor Networks, 2007; (CCWMSN07), Page(s): 390 - 393, 2007", propose plutôt que de décoder tout le signal, de ne décoder que les seuls coefficients pour déterminer les caractéristiques du signal codé - telle que la largeur de bande du contenu audio codé. Préférentiellement, l'invention utilise une méthode de détection sans décodage complet des flux lorsque qu'une telle méthode existe pour la technologie de codage utilisée. Ceci permet alors de réduire notablement la complexité de la détection. Avantageusement, les résultats de ces décodages partiels sont sauvegardés en mémoire pour une utilisation ultérieure lors du décodage complet des flux audio à mixer.

Dans un autre mode de réalisation de l'invention, la présence d'une bande de fréquence prédéterminée dans un flux codé s'effectue selon les étapes suivantes:

- détermination par sous-bande de fréquence, d'un ensemble prédéterminé de sous-bandes, d'un signal estimé à partir du flux codé;
- détermination par sous-bande de fréquence de l'ensemble prédéterminé de sous-bandes, de paramètres non codés représentatifs du contenu audio, à partir du signal estimé correspondant;
- calcul d'au moins un critère local à partir des paramètres déterminés;
- décision quant à la présence d'une bande de fréquence prédéterminée dans au moins une sous-bande du contenu audio en fonction du au moins un critère local calculé.

Ceci est applicable par exemple pour un codage de type G.722 et permet d'éviter le décodage des flux audio avant l'étape de détection. Seuls les flux détectés sont décodés. La complexité est donc aussi réduite.

Avantageusement, au moins une partie des paramètres déterminés, représentatifs du contenu audio, est sauvegardée en mémoire pour une utilisation ultérieure lors du décodage des flux audio à mixer.

Ainsi, ceci permet de simplifier les étapes de décodage puisque certains paramètres ne sont plus à déterminer.

Dans une application particulière, le procédé comporte:

- plusieurs étapes de détection de bande de fréquence prédéterminée dans des flux audio codés, la détection d'une première bande de fréquence prédéterminée dans une première sous-bande permettant d'obtenir un premier ensemble de flux audio codés, la détection d'une deuxième bande de fréquence prédéterminée dans une deuxième sous-bande permettant d'obtenir un deuxième ensemble de flux audio codés compris dans le premier ensemble; et
- des étapes d'addition de flux audio décodés pour chacun des ensembles de flux audio codés obtenus.

Dans ce mode de réalisation, le nombre de flux à mixer pour certaines sous-bandes (par exemple, les sous-bandes hautes) est de plus en plus restreint au fur et à mesure que l'on se rapproche de la sous-bande la plus haute. Ceci permet pour certaines sous-bandes, de simplifier à la fois le mixage et le décodage des flux.

L'invention s'applique également à un dispositif de mixage d'une pluralité de flux audio codés selon un codage en sous-bandes de fréquence, comportant:

- un module de décodage d'une partie des flux codés sur au moins une première sous-bande de fréquence;
- un module d'addition des flux ainsi décodés pour former au moins un premier flux mixé.

Le dispositif est tel qu'il comporte en outre:

- un module de détection, sur au moins une deuxième sous-bande de fréquence différente de la au moins une première sous-bande, de présence d'une bande de fréquence prédéterminée dans la pluralité de flux audio codés;
- un module d'addition des flux audio décodés pour lesquels la présence de la bande de fréquence prédéterminée a été détectée, sur la dite au moins une deuxième sous-bande, pour former au moins un deuxième flux mixé.

Le dispositif a les mêmes avantages que ceux du procédé qu'il met en oeuvre.

L'invention se rapporte à un pont de conférence comportant un dispositif de mixage tel que décrit ainsi qu'à un terminal de communication, une passerelle de communication comportant un dispositif de mixage tel que décrit.

L'invention vise un programme informatique comportant des instructions de code pour la mise en oeuvre des étapes du procédé de mixage tel que décrit précédemment, lorsque ces instructions sont exécutées par un processeur.

Enfin, l'invention se rapporte à un support de stockage, lisible par un processeur, intégré ou non au dispositif de mixage, éventuellement amovible, sur lequel est stocké un programme informatique comprenant des instructions de code pour l'exécution des étapes du procédé de mixage tel que décrit précédemment.

D'autres caractéristiques et avantages de l'invention apparaîtront plus clairement à la lecture de la description suivante, donnée uniquement à titre d'exemple non limitatif, et faite en référence aux dessins annexés.

**DESCRIPTION DES FIGURES**

- la figure 1a décrite précédemment, illustre le principe de fonctionnement d'un pont répliquant selon l'état de l'art;
- la figure 1b décrite précédemment illustre le principe de fonctionnement d'un pont de mixage selon l'état de l'art;
- la figure 2 illustre les étapes principales du procédé de mixage selon un mode de réalisation de l'invention;
- la figure 3 illustre un codeur de type G.722 délivrant des flux aptes à être mixés selon le procédé de l'invention;
- la figure 4 illustre les étapes d'un mode particulier de réalisation pour des flux codés de type G.722 et mises en oeuvre dans un pont centralisé;
- la figure 5 illustre les étapes mises en oeuvre dans un mode de réalisation pour l'étape de détection d'une bande de fréquence prédéterminée selon l'invention;
- la figure 6 illustre les étapes d'un mode particulier de réalisation pour des flux codés par un codeur super-HD à quatre sous-bandes et mises en oeuvre dans un pont centralisé;
- la figure 7 illustre un codeur de type G.711.1 délivrant des flux aptes à être mixés selon le procédé de l'invention;
- la figure 8 illustre les étapes d'un mode particulier de réalisation pour des flux codés de type G.711.1 et mises en oeuvre dans un pont centralisé; et
- les figures 9a et 9b illustrent des représentations matérielles de dispositifs de mixage selon des modes de réalisation de l'invention.

**MODES DE RÉALISATION**

La **figure 2** illustre les principales étapes d'un mode de réalisation du procédé de mixage selon l'invention. A partir d'une pluralité (N) de flux codés ($Be_j=(Be_j^l, Be_j^h)$) selon une méthode de codage par sous-bandes de fréquence, le procédé comporte une étape de décodage en E201 d'une partie des flux codés reçus et sur au moins une sous-bande de fréquence. Ainsi, à partir des flux binaires $Be_j^l$ d'une sous-bande de fréquence, par exemple la sous-bande basse fréquence, on obtient à l'issue de ce décodage les signaux reconstruits $s_j^l$ de la sous-bande de fréquence basse.

A l'étape E202, un mixage de ces flux est effectué sur cette au moins une bande de fréquence. Les flux décodés sont donc additionnés pour former un premier flux mixé $S_i^l=\sum_j s_j^l$ (avec $0 \leq j < N$, et dans le cas du pont centralisé $j \neq i$).

Dans une étape optionnelle E206a, le signal mixé $S_i^l$ est codé pour obtenir un flux $Bs_i^l$.

A partir des flux codés reçus, une étape E203 est mise en oeuvre pour détecter la présence d'une bande de fréquence prédéterminée dans les flux codés. La détection d'une bande de fréquence peut s'effectuer de différentes façons. Des exemples de réalisation seront explicités ultérieurement. A l'issue de cette étape de détection, un ensemble $H_1$ de flux contenant la bande de fréquence prédéterminée est obtenu. Cet ensemble comporte un nombre $N_1$ de flux avec $N_1 \leq N$.

Par souci de concision, on décrit par la suite le cas où la bande de fréquence prédéterminée à détecter dans un flux codé est une bande haute fréquence. Il est évident pour l'homme du métier d'adapter cette détection à d'autres types de bande de fréquence, par exemple à une bande basse fréquence ou encore à une bande de fréquence d'une plage de valeurs prédéfinie.

Ces $N_1$ flux pour lesquels la présence de la bande de fréquence prédéterminée a été détectée sont décodés à l'étape E204. Ainsi, à partir des $N_1$ flux binaires $Be_j^h$ d'une sous-bande de fréquence, par exemple la sous-bande haute fréquence, on obtient à l'issue de ce décodage les signaux reconstruits $s_j^h$ de la sous-bande de fréquence haute, avec $j \in H_1$.

A l'étape E205, un mixage de ces flux est effectué sur cette bande de fréquence. Les flux décodés sont donc additionnés pour former un deuxième flux mixé $S_i^h = \Sigma s_j^h$ (avec $j \in H_1$, et dans le cas du pont centralisé $j \neq i$). Dans une étape optionnelle E207a, le signal mixé $S_i^h$ est codé pour obtenir un flux $Bs_i^h$. Le deuxième flux codé $Bs_i^h$ est combiné à l'étape optionnelle E208a de combinaison des flux binaires au premier flux mixé codé $Bs_i^l$ obtenu à l'étape E206a : $(Bs_i^l, Bs_i^h)$, ce flux ainsi combiné constitue le flux à transmettre au terminal *i*.

En variante, dans une étape optionnelle E208b, le deuxième flux mixé de la sous-bande haute $S_j^h$ obtenu à l'étape E205 est ensuite combiné au premier flux mixé de la sous-bande basse $S_i^l$ obtenu à l'étape E202, pour constituer le flux à restituer.

Ce procédé s'applique notamment dans un pont centralisé qui reçoit N flux de différents terminaux et transmet le flux mixé à chacun des terminaux i après ré-encodage.

Il s'applique également à un terminal recevant N flux d'autres terminaux et mixant selon le procédé ces N flux reçus pour une restitution sur le terminal.

Un premier mode de réalisation est maintenant décrit pour des flux audio qui ont été codés selon une méthode de codage de type normalisé UIT-T G.722.

La **figure 3** illustre ce mode de codage. Il est aussi décrit dans le document cité précédemment: " Rec. ITU-T G.722, 7 kHz audio-coding within 64 kbit/s, Sep. 2012".

Le codeur G.722 code le signal d'entrée (x(n)) échantillonné à 16 kHz en deux sous-bandes échantillonnées à 8 kHz. La division en sous-bandes est faite par un filtre miroir en quadrature (QMF pour "*Quadrature Mirror Filter*" en anglais) par le module 301. A partir de deux échantillons d'entrée le filtre QMF donne en sortie un échantillon $x_L(n)$ de bande basse (0-4000 Hz) et un échantillon $x_H(n)$ de bande haute (4000-8000 Hz). Les signaux des 2 sous-bandes sont codés indépendamment par des codeurs MICDA (Modulation par Impulsions et Codage Différentiel Adaptatif) 302 et 303.

Les indices des deux erreurs de prédiction quantifiées $I_H(n)$ et $I_L(n)$ sont ainsi transmis dans le flux binaire I(n) après multiplexage en 304. Le codeur G.722 a trois débits: 64, 56 et 48 kbit/s. Chaque échantillon de la sous-bande basse est codé sur 6 bits au plus haut débit (48 kbit/s), sur 5 bits au débit intermédiaire (40 kbit/s), et sur 4 bits au plus bas débit (32 kbit/s). Au plus haut débit, le flux codé de la sous-bande basse est constitué de la couche coeur à 4 bits par échantillon et de deux couches d'amélioration à 1 bit par échantillon chacune. La sous-bande haute est toujours codée sur 2 bits (16 kbit/s) par échantillon indépendamment du débit.

Un premier exemple de réalisation est illustré à présent à la **figure 4** qui représente les étapes du procédé selon l'invention, mises en oeuvre dans un dispositif de mixage en architecture centralisée recevant des flux codés par le codeur UIT-T G.722 à 64 kbit/s. Comme mentionné précédemment, ce codeur est un codeur en sous-bandes, les signaux des deux (*M*=2) sous-bandes étant codés par la technologie MICDA.

A partir de *N* flux binaires hiérarchiques (encore appelées ci-après voies d'entrée), codés dans ce mode de réalisation par le G.722 à 64 kbit/s, une étape optionnelle E401 de présélection de *N'* flux est mise en oeuvre.

Cette étape de présélection permet de sélectionner parmi les différentes voies d'entrée, celles qui respectent un ou plusieurs des critères de sélection décrits précédemment pour les méthodes de l'état de l'art. Par exemple, à partir de la détection d'activité vocale, le critère FCFS (pour "First Come First Serve" en anglais) est utilisé pour sélectionner les flux. Ou bien à partir de la mesure de la puissance du signal ou de son énergie, le critère LT (pour "Loudest Talker" en anglais) est utilisé pour sélectionner les flux avec une intensité la plus forte.

Ainsi, une partie (N' avec N'<N) des flux codés reçus par le dispositif de mixage ou pont de mixage est pris en compte pour mettre en oeuvre le procédé de mixage. Ceci réduit donc la complexité de mise en oeuvre des étapes du procédé puisque le nombre de voies à mixer est restreint.

Cette étape de présélection est optionnelle et l'étape de décodage E402 peut alors s'appliquer à l'ensemble N des flux audio codés d'entrée.

Par la suite, pour souci de clarté, nous utiliserons la notation N' (avec N'≤N) que cette étape optionnelle soit mise en oeuvre ou non et nous noterons V' l'ensemble des indices de ces voies.

L'étape E402 de décodage des N' flux dans la sous-bande basse, est ensuite mise en oeuvre. En variante, particulièrement avantageuse si l'étape E402 est peu complexe, l'étape de présélection E401 peut être effectuée après cette étape de décodage E402 de tous les flux d'entrée sous-bande basse.

Ou encore, en complément, une seconde étape de présélection peut être effectuée après cette étape de décodage pour éventuellement restreindre davantage le nombre de voies en prendre en compte dans le traitement des flux sous-bande haute à détecter, mixer et à ré-encoder (étapes E405 à E408) et/ou dans le traitement des flux sous-bande bande basse à mixer et à ré-encoder (étapes E403 à E404).

Pour ces N' flux audio codés, on note pour chaque voie *j*($j \in V'$):

- $Be_j^l$ le flux binaire sous-bande basse entrant (composé de la couche coeur et de deux couches d'amélioration);
- $Be_j^h$ le flux binaire sous-bande haute entrant.

A l'étape de décodage E402, le signal reconstruit $s_j^l$ de la sous-bande basse est obtenu en décodant le flux $Be_j^l$.

A l'étape E403, une procédure de mixage des flux binaires ainsi décodés est effectué par addition de N'-1 signaux ainsi reconstruits de la sous-bande basse: $S_i^l=\Sigma s_j^l$ avec $j \in V'$, $j \neq i$ pour une transmission du flux vers le terminal i. A noter que si $i \in V'$, $S_i^l$ est la somme de N'-1 signaux, sinon $S_i^l$ est la somme de N' signaux.

Le flux binaire de sortie sous-bande basse $(Bs_i^l)$ destiné à être transmis à un terminal Ti ($0 \leq i < N$) est alors obtenu par codage à l'étape E404, par l'encodeur sous-bande basse du G.722 (MICDA sur 6 bits), de ce signal somme $S_i^l$.

A partir de l'ensemble N' de voies d'entrée, une étape de détection d'une bande de fréquence prédéterminée E405 est effectuée. Dans ce mode de réalisation, la bande de fréquence prédéterminée est la bande haute fréquence. Cela permet de déterminer la présence d'un contenu HD dans un flux codé. Ainsi, une analyse du contenu audio des voies d'entrée est effectuée.

Différents modes de détection de la présence de la bande haute fréquence sont possibles. Par exemple, la méthode de détection d'un contenu HD dans un flux *j* peut utiliser une comparaison de l'énergie du signal reconstruit de la sous-bande haute, $s_j^h$, avec celle du signal reconstruit de la sous-bande basse $s_j^l$. Ce mode de réalisation nécessite un décodage du flux audio à analyser dans la sous-bande haute, en plus du décodage de la sous-bande basse.

En alternative, pour éviter le décodage des signaux de la sous-bande haute, un procédé de détection à faible coût algorithmique peut être mis en oeuvre. Ce procédé est décrit ultérieurement en référence à la figure 5.

A l'issue de l'étape E405, un ensemble $H_1$ de flux pour lesquels la présence de la bande de fréquence prédéterminée a été détectée est obtenu. Dans ce mode de réalisation, il s'agit des flux ayant du contenu HD. Le nombre de flux de l'ensemble $H_1$ est de $N_1$, avec $N_l \leq N'$.

A l'étape E406, les flux audio $Be_j^h$ (avec $j \in H_1$) de l'ensemble $H_1$ sont décodés pour obtenir les $N_1$ signaux reconstruits de la sous-bande haute $s_j^h$.

A l'étape E407, un mixage des flux décodés de l'ensemble $H_1$ est effectué pour une transmission vers le terminal i.

Si $i \in H_1$, alors le mixage se fait par addition de $N_1$-1 signaux reconstruits de la sous-bande haute: $S_i^h=\Sigma s_j^h$ *avec* $j \in H_1-\{i\}$.

Dans le cas contraire, ($i \notin H_1$) alors le mixage s'effectue par addition des $N_1$ signaux reconstruits de la sous-bande haute $S_i^h=\Sigma s_j^h$ *avec* $j \in H_1$.

A l'étape E408, le flux binaire de sortie sous-bande haute $(Bs_i^h)$ destiné à être transmis au terminal Ti ($0 \leq i < N$) est alors obtenu par codage par l'encodeur sous-bande basse du G.722 (MICDA sur 2 bits), du signal mixé $S_i^h$.

Selon le nombre de signaux à considérer à l'issue des étapes E401 (optionnelle) et E405, il est quelquefois plus avantageux de commencer par effectuer la sommation des *N'* signaux $(S^l = \sum_{j \in V'} s_j^l$ ou $S^h = \sum_{j \in H_1} s_j^h)$ puis d'obtenir les signaux à ré-encoder pour la sortie *i* par soustraction de $s_i^l$ à $S^l$ si $i \in V'$ ou de $s_i^h$ à $S^h$ si $i \in H_1$ ($S_i^l=S^l-s_i^l$ ou de $S_i^h=S^h-s_i^h$). On note que si $i \notin H_1$ $S_i^h=S^h$; de même si $i \notin V'$ $S_i^l=S^l$. Au lieu de calculer par la sous-bande basse (respectivement haute), *N'* (resp. $N_1$) sommes de *N'*-1 (resp. $N_1$-1) signaux, on calcule une somme de *N'* (resp. $N_1$) signaux puis *N'* (resp. $N_1$) différences - soit 2*N'* (resp. $2N_1$) calculs au lieu de *N'*(*N'*-1) (resp. $N_1(N_1-1)$).

Dans la suite, on comprend que le terme « addition » de *N*-1 signaux peut se référer à la soustraction d'un signal à la somme de *N* signaux.

Ainsi, en tenant compte de la présence ou non d'un contenu haute fréquence dans les flux à combiner, cela permet de réduire la complexité des étapes de décodage E406 et de mixage E407. En effet à l'étape E406, seuls les flux ayant du contenu HD sont décodés, donc le nombre de décodages MICDA est réduit de $N'$ à $N_1$. De même à l'étape E407, il n'y a pas $2N'$ (ou $N'(N'-1)$) calculs mais $2N_1$ (ou $N_1(N_1-1)$) calculs.

De plus les signaux $s_i^h$ étant les mêmes pour les sorties $i$, $i \notin H_1$, le nombre de ré-encodage à l'étape E408 peut être réduit de $N'+1$ à $N_1+1$. Il faut cependant rajouter la complexité de la détection de contenus HD dans les voies d'entrée à l'étape E405.

Une méthode de faible complexité de détection d'une bande de fréquence dans un contenu audio peut être mise en oeuvre dans le cadre de cette invention. Cette méthode est maintenant décrite en référence à la **figure 5.**

Une étape E501 détermine dans un premier temps, par sous-bande de fréquence d'un ensemble prédéterminé de sous-bandes de fréquence, un signal estimé à partir du flux binaire. Pour cela, sont mises en oeuvre des étapes d'obtention d'un paramètre d'adaptation associé à l'indice de quantification pour un échantillon courant n et de calcul d'un signal estimé pour l'échantillon courant à partir de ce paramètre d'adaptation déterminé, du signal estimé pour l'échantillon précédent et d'un facteur d'oubli prédéfini. Un exemple de réalisation d'une telle technique de détermination d'un signal estimé est décrit dans la demande de brevet française FR 11 52596.

Ce signal estimé est représentatif du contenu audio qui a été codé. L'ensemble prédéterminé de sous-bandes, c'est-à-dire les sous-bandes considérées pour estimer ces signaux représentatifs ainsi que leur nombre M, peuvent être prédéfinis ou peuvent évoluer au cours du temps.

Par la suite, on notera ce signal estimé pour une sous-bande k ($0 \le k < M$): $\tilde{s}_k(n)$, $n=0, ..., N_k-1$, $N_k$ étant le nombre d'échantillons dans une sous-bande k.

Une étape E502 de détermination de paramètres non codés représentatifs du contenu audio est ensuite mise en oeuvre. Ces paramètres p(k) sont déterminés par sous-bande de fréquence de l'ensemble prédéterminé de sous-bandes, à partir du signal estimé dans les sous-bandes correspondantes.

Plusieurs types de paramètres peuvent être calculés. Quelques exemples en sont donnés ci-après.

Pour une sous-bande *k*, un paramètre peut être déterminé par exemple à partir d'une norme du signal estimé (ou une puissance de cette norme). De tels paramètres sont donnés ci-dessous pour une bande *k* donnée ($0 \le k < M$) :

$$L_\infty(k) = \max_{n=0,\dots,N_k-1}\left(\left|\tilde{s}_k(n)\right|\right) \;;\; L_1(k) = \sum_{n=0}^{N_k-1}\left|\tilde{s}_k(n)\right| \;;\; L_2(k) = \sum_{n=0}^{N_k-1}\tilde{s}_k(n)^2$$

Des versions « normalisées » peuvent être aussi utilisées, telles que :

$$L'_1(k) = \frac{1}{N_k}\sum_{n=0}^{N_k-1}\left|\tilde{s}_k(n)\right| \;;\; L'_2(k) = \frac{1}{N_k}\sum_{n=0}^{N_k-1}\tilde{s}_k(n)^2$$

On peut aussi utiliser d'autres types de paramètres tels qu'un rapport : par exemple, le rapport entre le minimum et le maximum du signal estimé - en valeurs absolues ou non -:

$$\rho_{\min\max}(k) = \frac{\min_{n=0,\dots,N_k-1}\left(\left|\tilde{s}_k(n)\right|\right)}{\max_{n=0,\dots,N_k-1}\left(\left|\tilde{s}_k(n)\right|\right)} \;;\; \rho'_{\min\max}(k) = \frac{\min_{n=0,\dots,N_k-1}\left(\tilde{s}_k(n)\right)}{\max_{n=0,\dots,N_k-1}\left(\tilde{s}_k(n)\right)}.$$

Evidemment, l'inverse de ce rapport peut être aussi considéré.

Dans un exemple de réalisation, un même paramètre est calculé pour différentes sous-bandes. Cependant un paramètre peut n'être calculé que sur un nombre plus restreint (éventuellement restreint à une seule sous-bande) de sous-bandes.

A partir d'au moins un de ces paramètres, l'étape E503 est mise en oeuvre pour calculer au moins un critère local.

Ce critère local peut être calculé à partir de paramètres d'une seule sous-bande ou de paramètres calculés sur plus d'une sous-bande. Pour distinguer ces deux catégories de critère nous les nommons selon le nombre de sous-bandes prises en compte lors du calcul, critère mono-bande et critère multi-bande.
Pour chaque catégorie, quelques exemples de critères sont détaillés ci-après.

Un critère mono-bande utilise une "distance" entre un paramètre *p(k)* d'une sous-bande *k* et un seuil $thresh_m(k)$. Ce seuil peut être adaptatif ou non et peut dépendre éventuellement de la sous-bande considérée. On note alors d(k) le critère mono-bande tel que:

$$d(k) = dist\big(p(k), thresh_{\mathrm{m}}(k)\big)$$

Avantageusement, cette "distance" est la simple différence entre le paramètre *p(k)* et ce seuil:

$$d(k) = dist\big(p(k), thresh_{\mathrm{m}}(k)\big) = p(k) - thresh_{\mathrm{m}}(k)$$

Par exemple, ces critères mono-bande peuvent être définis par les équations ci-dessous, sur les sous-bandes *k* et *k'*, ($0 \le k, k' < M$) :

$$crit0_m(k) = dist(L_\infty(k), thresh0_m(k)),\ crit1_m(k') = dist(L'_1(k'), thresh1_m(k')),$$

où $thresh0_m(k)$ et $thresh1_m(k')$ sont des seuils -adaptatifs ou non - et pouvant dépendre de la sous-bande considérée.

On pourrait, par exemple, adapter le seuil sur la bande *i* en fonction de la bande *j*, ou en fonction d'un bloc d'échantillons précédent.

Un critère multi-bande compare des paramètres calculés sur au moins deux sous-bandes - par exemple, un paramètre *p(k)* d'une sous-bande *i* et un paramètre *q(k')* d'une sous-bande *k'*.

Là aussi, comme dans le cas de critère mono-bande, un seuil $thresh_M(k,k')$- adaptatif ou non - et dépendant éventuellement des sous-bandes considérées peut être utilisé. Par exemple, ces critères multi-bande peuvent être définis par les équations ci-dessous, sur les sous-bandes *k* et *k'*, ($0 \le k, k' < M$) :

$$crit0_M(k,k') = dist_{th}(dist_p(\rho'_{\mathrm{min\,max}}(k), \rho_{\mathrm{min\,max}}(k')), thresh0_M(k,k')),$$

$$crit1_M(k,k') = dist'_{th}(dist'_p(L'_1(k), L'_1(k')), thresh1_M(k,k'))$$

Avantageusement, une "distance" $dist_{th}$ est une simple différence entre un seuil et une distance $dist_p$ entre des paramètres d'au moins deux sous-bandes.

La distance $dist_p$ entre des paramètres d'au moins deux sous-bandes peut utiliser des rapports entre paramètres. Par exemple, dans le cas d'une « distance » entre paramètres de deux sous-bandes :

$$dist_p(L'_1(k), L'_1(k')) = {L'_1(k)}\big/{L'_1(k')} \quad \text{ou} \quad dist'_p(L'_1(k), L_\infty(k')) = {L'_1(k)}\big/{L_\infty(k')}$$

On note aussi qu'un même ensemble de paramètres peut être utilisé pour calculer plusieurs critères tant dans le cas d'un critère mono-bande que d'un critère multi-bande.

A partir d'au moins un critère local tel que défini, l'étape E504 est mise en oeuvre. A cette étape, une décision locale (« instantanée », notée $dec_{inst}^{cur}$) est prise en détectant si le contenu audio codé comporte des fréquences dans au moins une sous-bande.

Dans un mode particulier de réalisation, dans le cas de détection d'une bande de fréquence dite bande haute fréquence (i.e. fréquences supérieures à une fréquence seuil $F_{th}$), on décide si le contenu audio comporte des fréquences dans les sous-bandes *i* telles que, $i_{th} \le k$, où $i_{th}$ est l'indice de la sous-bande incluant la fréquence $F_{th}$. Au moins une de ces sous-bandes *k* est prise en considération à l'étape de décision.

Dans l'exemple particulier du codeur voix HD fixe G.722 à deux sous-bandes, quand on cherche à détecter si le contenu codé est réellement bande élargie (WB), on détecte s'il y a du contenu pertinent dans la deuxième sous-bande (sous-bande haute) pour prendre une décision "Bande étroite" NB ou "Bande élargie" WB.

Dans le cas où la bande de fréquence prédéterminée n'est pas la bande haute fréquence, la décision est bien sûr adaptée et les sous-bandes considérées peuvent être celles qui sont inférieures à une fréquence seuil pour détecter une bande basse fréquence ou encore celles qui sont définies par des fréquences encadrant cette bande de fréquence prédéterminée.

Pour prendre cette décision, au moins un critère local est utile. En variante, plusieurs critères peuvent être utilisés seuls ou conjointement.

La décision peut être souple ou dure. Une décision dure consiste à comparer au moins un critère à un seuil et à prendre une décision binaire ou à états prédéfinis sur la présence de la bande de fréquence dans la sous-bande.

Une décision souple consiste à utiliser la valeur du critère pour définir selon un intervalle de valeurs prédéfinies, une probabilité plus ou moins importante de présence de la bande de fréquence dans la sous-bande considérée.

Dans un mode de réalisation particulier, une étape de détection du type de contenu, par exemple un contenu vocal, est d'abord réalisée afin de n'effectuer la détection locale que sur les trames pertinentes, c'est-à-dire comportant ce type de contenu.

Pour détecter ce type de contenu, de façon avantageuse, les paramètres déterminés en E502 sur les signaux représentatifs des signaux en sous-bandes sont utilisés.

Dans une variante de réalisation, pour augmenter la fiabilité de la détection, la décision finale pour un bloc courant d'échantillons, notée $dec^{cur}$, dépend non seulement de la détection locale « instantanée » mais aussi des détections passées. A partir de décisions locales souples ou dures par bloc, une décision globale est prise sur un nombre de K blocs précédents le bloc courant. Ce nombre de K blocs est ajustable en fonction d'un compromis fiabilité de la décision/rapidité de la décision.

Par exemple, les détections locales peuvent être lissées sur plusieurs blocs par une fenêtre éventuellement glissante. La dépendance de la décision courante aux détections passées peut aussi être fonction de la fiabilité de la décision locale. Par exemple, si la décision locale est estimée sûre, la dépendance de la décision courante vis-à-vis des décisions passées peut être minimisée voire même annulée.

Plusieurs modes de réalisation sont possibles pour le procédé de détection tel que décrit, tant dans le choix des paramètres, des critères, de la manière de combiner éventuellement plusieurs critères que dans l'utilisation de décision souples ou dures, localement ou globalement. Il est possible ainsi d'optimiser le compromis complexité/fiabilité de la détection ainsi que la réactivité de la détection.

Comme mentionné, ce procédé de détection à faible coût algorithmique de la bande audio d'un contenu codé par le G.722 effectue aussi dans un mode préféré une détection d'activité vocale. Cette information est alors avantageusement utilisée à l'étape E401 de la figure 4 pour déterminer l'ensemble V'. De même cette méthode estime avec une complexité réduite des signaux caractéristiques des signaux en sous-bandes à partir du ou d'une partie au moins du flux binaire et ceci sans décoder complètement les signaux en sous-bandes.

Ainsi, un autre avantage de cette technique de détection est que la plupart des calculs nécessaires au décodage a déjà été effectuée pour la détection. Ainsi, selon le compromis mémoire de stockage/complexité de calcul, les signaux utilisés pour la détection de contenu HD (étape E405) peuvent être gardés en mémoire pour être utilisés pour réduire la complexité des étapes de décodage des signaux des sous-bandes basse (étape E402) et haute (étape E406).

Le procédé de mixage selon l'invention s'applique à la combinaison de flux codés par des codeurs fonctionnant sur des largeurs de bande diverses (bande médium, bande super-élargie, bande HiFi, ...). Par exemple dans le cas d'un codeur "super-HD" (à quatre sous-bandes codées par la technologie MICDA) comme décrit par exemple dans le document des auteurs A. Charbonnier, J. P. Petit, intitulé "Sub-band ADPCM coding for high quality audio signals" dans ICASSP 1988, pp. 2540-2543, l'application de l'invention peut consister à effectuer une recombinaison directe des signaux des deux sous-bandes basses (correspondant à la bande élargie [0-8 kHz]) et à recombiner les signaux des deux sous-bandes hautes (correspondant à la bande audio [8-16 kHz]) sélectionnés après détection de contenu super-HD. Un autre exemple d'application de l'invention à ce codeur super-HD consiste à combiner les signaux de la sous-bande la plus basse (correspondant à la bande étroite [0-4 kHz]), à recombiner les signaux de la deuxième sous-bande (correspondant à la bande audio [4- 8 kHz]) sélectionnés après détection de contenu HD et à recombiner les signaux des deux sous-bandes hautes (correspondant à la bande audio [8-16 kHz]) ayant été sélectionnés après détection de contenu super-HD.

La **figure 6** illustre cet exemple d'application. Dans cet exemple de réalisation, le procédé de mixage est mis en oeuvre dans un dispositif de mixage en architecture centralisée comportant un pont combinant des flux codés par un codeur "super-HD" - à quatre sous-bandes codées par la technologie MICDA. Ce codeur est un codeur en sous-bandes, les signaux des quatre ($M$=4) sous-bandes étant codés par la technologie MICDA.

Pour limiter la complexité, dans ce mode de réalisation, la technique décrite en référence à la figure 5, est utilisée pour détecter si un flux est actif ou non et s'il contient du contenu HD et/ou super-HD. Comme dans le mode de réalisation précédent, les signaux estimés pour la détection de contenu HD et super-HD peuvent être gardés en mémoire pour être utilisés au décodage, pour réduire la complexité des étapes de décodage des signaux des sous-bandes.

A partir de $N$ flux binaires hiérarchiques ou voies d'entrée, codés dans ce mode de réalisation par la technologie MICDA-4SB, une étape optionnelle E601 de présélection est mise en oeuvre.

Cette étape de présélection permet de sélectionner parmi les différentes voies d'entrée, celles qui respectent un ou plusieurs des critères de sélection décrits précédemment pour les méthodes de l'état de l'art. Par exemple, à partir de la détection d'activité vocale, le critère FCFS (pour "First Come First Serve" en anglais) est utilisé pour sélectionner des flux. Ou bien, à partir de la mesure de la puissance du signal ou de son énergie, le critère LT (pour "Loudest Talker" en anglais) est utilisé pour sélectionner les flux avec une intensité la plus forte.

Ainsi, une partie (N' avec N'≤N) des flux codés reçus par le dispositif de mixage ou pont de mixage est pris en compte pour mettre en oeuvre le procédé de mixage. Ceci réduit donc la complexité de mise en oeuvre des étapes du procédé puisque le nombre de voies à mixer est restreint.

Cette étape de présélection est optionnelle et l'étape de décodage E602 peut alors s'appliquer à l'ensemble N des flux audio codés d'entrée. On note V' l'ensemble des voies d'entrée considérées, constitué soit des N' voies d'entrée si l'étape de présélection optionnelle est mise en oeuvre, soit des N voies d'entrée sinon.

Comme précédemment, nous utilisons la notation N' (avec N'≤N) que l'étape optionnelle E601 soit mise en oeuvre ou non. De même, la présélection peut être effectuée en variante ou en complément après l'étape de décodage de la sous-bande basse.

L'étape E602 de décodage des N' flux dans la sous-bande basse, est ensuite mise en oeuvre.

Pour l'ensemble V', on note pour chaque voie jd'entrée ($j \in V'$):

- $Be_j^f$, $f$=0, ...,3 le flux binaire entrant de la sous-bande $f$(correspondant à la bande audio [4$f$-4($f$+1) kHz]
- $s_j^f$ le signal reconstruit de la sous-bande $f$ obtenu en décodant le flux $Be_j^f$
- On note aussi pour chaque voie $i$ de sortie (0≤i<$N$): $Bs_i^f$ le flux binaire sortant pour la sous-bande $f$, $f$=0, ...,3.

A l'étape de décodage E602, le signal reconstruit $s_j^0$ de la sous-bande la plus basse (correspondant à la bande étroite [0-4 kHz]) est obtenu en décodant le flux $Be_j^0$ ($j \in V'$).

A l'étape E603, une procédure de mixage des flux binaires ainsi décodés est effectué par addition de N'-1 signaux ainsi reconstruits de la sous-bande basse: $S_i^0 = \Sigma\, s_j^0$ avec $j \in V', j \neq i$ pour une transmission du flux vers le terminal i.

Si l'étape de présélection E601 est effectuée et si i $\in$ V' , alors le mixage se fait par addition de N'-1 signaux reconstruits de la sous-bande 0: $S_i^0 = \Sigma\, s_j^0$ *avec* $j \in V'$-{$i$}.

Dans le cas contraire, ($i \notin$ V') alors le mixage s'effectue par addition des N' signaux reconstruits de la sous-bande 0 : $S_i^0 = \Sigma\, s_j^0$ *avec* $j \in$ V'.

Le flux binaire de sortie sous-bande basse ($Bs_i^0$) destiné à être transmis à un terminal Ti (0≤$i$<$N$) est alors obtenu par codage à l'étape E604, par l'encodeur MICDA, de ce signal somme $S_i^0$.

A partir des N' voies d'entrée, une étape E605 de détection d'une première bande de fréquence prédéterminée BF1 est effectuée. Dans ce mode de réalisation, la première bande de fréquence prédéterminée est la sous-bande de fréquence [4-8kHz]. Ainsi, une analyse du contenu audio de l'ensemble V' des voies d'entrée est effectuée. Le procédé décrit en référence à la figure 5 est par exemple mis en oeuvre pour détecter cette première bande de fréquence BF1.

Ainsi, un sous-ensemble $H_1$ de $N_1$ voies d'entrée avec du contenu HD est sélectionné à l'issue de l'étape E605. L'ensemble $H_1$ est inclus dans l'ensemble V' ($H_1 \subset$ V') des voies d'entrée considérées (c'est-à-dire dans l'ensemble des N' voies d'entrée présélectionnées si l'étape de présélection E601 est effectuée ; sinon dans l'ensemble des N voies d'entrée).

Bien évidemment, d'autres modes de détection de la présence de la bande BF1 sont possibles.

A l'étape E606 de décodage, les $N_1$ signaux reconstruits $s_j^1$ de la sous-bande haute ou sous-bande 1 sont obtenus par décodage de flux binaires sous-bande 1 $Be_j^1$, $j \in H_1$.

A l'étape E607, un mixage des flux décodés de l'ensemble $H_1$ est effectué pour une transmission vers le terminal i.

Si i $\in H_1$, alors le mixage se fait par addition de $N_1$-1 signaux reconstruits de la sous-bande 1: $S_i^1 = \Sigma\, s_j^1$ avec j $\in H_1$-{i}.

Dans le cas contraire, ($i \notin H_1$) alors le mixage s'effectue par addition des $N_1$ signaux reconstruits de la sous-bande 1 : $S_i^1 = \Sigma\, s_j^1$ avec $j \in H_1$.

A l'étape E608, le flux binaire de sortie sous-bande 1 ($Bs_i^1$) destiné à être transmis au terminal Ti est alors obtenu par codage par l'encodeur MICDA sous-bande haute, du signal mixé $S_i^1$.

A partir de l'ensemble $H_1$ déterminé à l'étape E605, une étape E609 de détection d'une deuxième bande de fréquence prédéterminée BF2 est effectuée. La deuxième bande de fréquence BF2 est dans cet exemple de réalisation, la sous-bande [8-12 kHz]. La méthode de détection de la figure 5 est par exemple utilisée. Ainsi, un sous-ensemble $H_2$ inclus dans $H_1$ ($H_2 \subset H_1$) de $N_2$ voies d'entrée ayant du contenu dans la sous-bande [8-12 kHz] est déterminé.

A l'étape E610 de décodage, les $N_2$ signaux reconstruits $s_j^2$ de la sous-bande 2 sont obtenus par décodage de flux binaires sous-bande 2 $Be_j^2, j \in H_2$.

A l'étape E611, un mixage des flux décodés de l'ensemble $H_2$ est effectué pour une transmission vers le terminal i.

Si i $\in H_2$, alors le mixage se fait par addition de $N_2$-1 signaux reconstruits de la sous-bande 2: $S_i^2 = \sum s_j^2$ avec j $\in H_2$-{i}.

Dans le cas contraire, ($i \notin H_2$) alors le mixage s'effectue par addition des $N_2$ signaux reconstruits de la sous-bande 2 : $S_i^2 = \sum s_j^2$ avec $j \in H_2$.

A l'étape E612, le flux binaire de sortie de la sous-bande 2 $(Bs_i^2)$ destiné à être transmis au terminal Ti est alors obtenu par codage par l'encodeur MICDA de la sous-bande 2, du signal mixé $S_i^2$.

A partir de l'ensemble $H_2$ déterminé à l'étape E609, une étape E613 de détection d'une troisième bande de fréquence prédéterminée BF3 est effectuée. La troisième bande de fréquence BF3 est dans cet exemple de réalisation, la sous-bande [12-16 kHz]. La méthode de détection de la figure 5 est par exemple utilisée. Ainsi, un sous-ensemble $H_3$ inclus dans $H_2$ ($H_3 \subset H_2$) de $N_3$ voies d'entrée ayant du contenu dans la sous-bande [12-16 kHz] est déterminé.

A l'étape E614 de décodage, les $N_3$ signaux reconstruits $s_j^3$ de la sous-bande 3 sont obtenus par décodage de flux binaires de la sous-bande 3 : $Be_j^3, j \in H_3$.

A l'étape E615, un mixage des flux décodés de l'ensemble $H_3$ est effectué pour une transmission vers le terminal i.

Si i $\in H_3$, alors le mixage se fait par addition de $N_3$-1 signaux reconstruits de la sous-bande 3: $S_i^3 = \sum s_j^3$ avec j $\in H_3$-{i}.

Dans le cas contraire, ($i \notin H_3$) alors le mixage s'effectue par addition des $N_3$ signaux reconstruits de la sous-bande 3 : $S_i^3 = \sum s_j$ avec $j \in H_3$.

A l'étape E616, le flux binaire de sortie sous-bande 3 $(Bs_i^3)$ destiné à être transmis au terminal Ti est alors obtenu par codage par l'encodeur MICDA de la sous-bande 3, du signal mixé $S_i^3$.

Plusieurs flux mixés codés sont ainsi obtenus ( $Bs_i^f$, $f=0,...,3$) pour les quatre sous-bandes f (f=0, ..., 3). Ces flux mixés sont transmis à un terminal *Ti* ($0 \leq i < N$). Une étape de combinaison de ces flux mixés peut être effectuée avant transmission.

Ainsi, la prise en compte de la présence ou non d'un contenu dans les sous-bandes hautes fréquences (sous-bandes 1, 2 ,3) dans les flux à combiner permet de réduire la complexité des étapes de décodage E606, E610 et E614, de mixage E607, E611 et E615 et de codage E608, E612 et E616.

En effet aux étapes E606, E610 et E614, avec f tel que f=1,2 ou 3, seuls les flux des sous-ensembles $H_f$ sont décodés, donc le nombre de décodages MICDA est réduit de *N'* à $N_f$ De même aux étapes E607, E611 et E615, il n'y pas 2*N'* (ou *N'*(*N'*-1)) calculs mais $2N_f$ (ou $N_f^2$). De plus les signaux $S_i^f$ étant les mêmes pour les sorties *i*, $i \notin H_f$, le nombre de ré-encodage aux étapes E608, E612 et E616, peut être réduit de *N'* à $N_f$+1.

Il faut aussi noter que n'effectuer la procédure de détection d'une bande de fréquence BFf que dans le sous-ensemble des voies d'entrée sélectionnées pour la bande de fréquence inférieure BF(f-1), réduit aussi la complexité des étapes de détection des différentes bandes de fréquence (E609 et E613).

De plus, comme mentionné précédemment, certains calculs nécessaires au décodage, ont pu être déjà effectués à l'étape de détection et sont ainsi réutilisables pour le décodage si l'entrée est sélectionnée. Ceci réduit donc encore la complexité de calcul du procédé.

Un autre exemple de réalisation du procédé de mixage selon l'invention est maintenant décrit. Ce mode de réalisation décrit la mise en oeuvre de l'invention dans un dispositif de mixage comportant un pont combinant des flux codés par le codeur UIT-T G.711.1 à 96 kbit/s.

Ce type de codeur, illustré à la **figure 7**, est un codeur en sous-bandes, la sous-bande basse est codée hiérarchiquement à 80 kbit/s (10 bits par échantillon) avec un codage coeur à 64 kbit/s (8 bits par échantillon) et une couche d'amélioration à 16 kbit/s (soit 2 bits par échantillon en moyenne) et la sous-bande haute à 16 kbit/s (2 bits par échantillon en moyenne). Il est aussi décrit dans le document susmentionné: "Rec. IUT-T G.711.1, Wideband embedded extension for G.711 pulse code modulation, 2008".

Le codeur G.711.1 opère sur des signaux audio échantillonnés à 16 kHz sur des blocs ou trames de 5 ms (soit 80 échantillons à 16 kHz). Le signal d'entrée x(n) est divisé en 2 sous-bandes [0, 4 kHz] et [4, 8 kHz] par des filtres QMF représentés en 702 après éventuellement un prétraitement (pour éliminer par exemple la composante continue par filtrage passe-haut) en 701. A partir de deux échantillons d'entrée le filtre QMF donne en sortie un échantillon $x_L(n)$ de sous-bande basse (0-4000 Hz) et un échantillon $x_H(n)$ de sous-bande haute (4000-8000 Hz). Le débit de 64 kbit/s ("Layer 0" compatible avec le G.711) correspond à la quantification de la sous-bande [0, 4 kHz] par la technique MIC (Modulations par Impulsions et codage) équivalente au G.711, avec une mise en forme du bruit de quantification. Les deux couches suivantes ("Layers" 1 et 2) codent respectivement la sous-bande basse [0, 4 kHz] par une technique d'amélioration de codage MIC, et la sous-bande haute [4, 8 kHz] par un codage par transformée MDCT (pour "Modified Discrete Cosine Transform" en anglais), chacune avec un débit de 16 kbit/s (80 bits par trame). Quand le décodeur reçoit ces couches d'amélioration, il peut améliorer la qualité du signal décodé.

Le codage coeur du signal sous-bande basse est effectué par le module 703a selon la technique MIC équivalente au G.711, avec une mise en forme du bruit de quantification. Nous rappelons brièvement ci-après le codage MIC utilisé dans le G.711.

Le codeur G.711 est basé sur une compression logarithmique sur 8 bits à la fréquence d'échantillonnage de 8 kHz, pour donner un débit de 64 kbit/s. Le codage MIC G.711 opère une compression des signaux filtrés dans la bande [300 - 3400 Hz] par une courbe logarithmique qui permet d'obtenir un rapport signal à bruit à peu près constant pour une large dynamique de signaux. Le pas de quantification varie avec l'amplitude de l'échantillon à coder: quand le niveau du signal d'entrée est faible, le pas de quantification est petit, quand le niveau du signal d'entrée est élevé, le pas de quantification est grand. Deux lois de compression MIC logarithmique sont utilisées: la loi $\mu$ (utilisée en Amérique du Nord et au Japon) et la loi A (utilisée en Europe et dans le reste du monde). Le G.711 loi A et le G.711 loi $\mu$ encodent sur 8 bits les échantillons d'entrée. En pratique, pour faciliter l'implantation du codeur G.711, la compression MIC logarithmique a été approximée par une courbe en segments. Lors de cette compression, les bits de poids faible de la mantisse sont perdus.

Dans la loi A, les 8 bits sont répartis de la façon suivante :

- 1 bit de signe
- 3 bits pour indiquer le segment,
- 4 bits pour indiquer l'emplacement sur le segment.

Le codage de la couche d'amélioration ("Layer" 1) de la sous-bande basse (effectué par le module 703b de la figure 7) permet de réduire l'erreur de quantification de la couche coeur ("Layer" 0) à base de G.711 en ajoutant des bits supplémentaires aux échantillons codés en G.711 (Enh.LB). Cette technique qui permet d'obtenir une augmentation du RSB (Rapport signal à bruit) de 6 dB pour chaque bit ajouté par échantillon consiste à sauvegarder et à transmettre dans un flux binaire d'amélioration les bits de poids fort parmi les bits perdus lors du codage MIC initial.

La récupération et la transmission de bits non transmis dans la mantisse du codage coeur MIC améliore la qualité du codage de la sous-bande basse. En effet, en cas de réception de cette couche d'amélioration, le décodeur peut décoder la mantisse avec une plus grande précision. Dans le G.711.1, le nombre de bits additionnels pour la mantisse dépend de l'amplitude des échantillons: en effet, plutôt que d'allouer le même nombre de bits pour améliorer la précision du codage de mantisse des échantillons, les 80 bits disponibles dans la couche 1 du G.711.1 pour améliorer la précision du codage de mantisse des 40 échantillons sont alloués dynamiquement : plus de bits étant attribués aux échantillons avec un fort exposant. Ainsi, tandis que le budget de bits de la couche d'amélioration est de 2 bits par échantillon en moyenne (16 kbit/s), avec cette allocation adaptative, le nombre de bits alloués à un échantillon varie selon sa valeur d'exposant de 0 à 3 bits.

Pour la sous-bande haute, une transformée en cosinus discrète modifiée TCDM (en anglais « Modified Discrete Cosine Transform » MDCT) est d'abord effectuée par le module 704, sur des blocs du signal de la bande haute de 10 ms avec un recouvrement de 5 ms. Puis les coefficients MDCT, $S_{HB}(k)$, sont codés par le module 705 par une quantification vectorielle à structure conjuguée entrelacée et ces coefficients sont ensuite pondérés puis normalisés (par la racine carrée de leur énergie). Ces coefficients sont alors répartis en 6 sous-vecteurs de dimension 6, les 4 coefficients représentant les plus hautes fréquences ne sont pas codés. Ces six sous-vecteurs sont quantifiés indépendamment sur 12 bits par un ensemble de deux dictionnaires à structure conjuguée, $C_{H0w}$ et $C_{H1w}$. Enfin un gain global par trame est calculé à partir des sous-vecteurs décodés et du facteur de normalisation, ce gain étant quantifié sur 8 bits par un quantificateur scalaire de type MIC loi $\mu$.

Les différentes couches de codage (avec les indices $I_{B0}(n)$, $I_{B1}(n)$, $I_{B2}(n)$) sont multiplexées en 706 pour donner le signal codé I(n).

Au décodeur, l'ensemble des 36 coefficients MDCT est reconstruit à partir des six sous-vecteurs décodés avec entrelacement inverse et les 4 coefficients représentant les plus hautes fréquences non codés sont simplement mis à zéro puis le signal de la bande haute décodé est généré par transformée MDCT inverse.

Dans les deux modes de réalisation précédents, une détection de contenu haute fréquence à faible coût algorithmique est utilisée et exploite les signaux estimés lors de cette détection pour réduire la complexité du décodage des signaux à sous-bandes sélectionnés pour la recombinaison. Dans ce troisième mode de réalisation, on montre que même lorsque la méthode de détection est une méthode conventionnelle, l'invention permet de réduire la complexité de la recombinaison de flux. Pour cela nous illustrons l'application de l'invention au codeur UIT-T G.711.1 tel que décrit en référence à la figure 7.

Dans ce mode de réalisation, la méthode de détection d'un contenu HD dans un flux d'entrée utilise une comparaison de l'énergie du signal décodé de la sous-bande haute, avec celle du signal décodé de la sous-bande basse.

La **figure 8** illustre cet exemple de réalisation. Soit donc un pont ayant N voies d'entrée (recevant N flux binaires hiérarchiques codés par le G.711.1 à 96 kbit/s), on note pour chaque voie d'entrée ($0 \leq j < N$):

- $Be_j^l$ le flux binaire de la sous-bande basse entrant (couche coeur + couche d'amélioration 1);
- $Be_j^h$ le flux binaire de la sous-bande haute entrant (couche d'amélioration 2);
- $s_j$ le signal reconstruit de la sous-bande basse obtenu en décodant le flux $Be_j^l$;
- $s_j^h$ le signal reconstruit de la sous-bande haute obtenu en décodant le flux $Be_j^h$; On note aussi pour chaque voie de sortie ($0 \leq i < N$):
- $Bs_i^l$ le flux binaire de la sous-bande basse sortant; et
- $Bs_i^h$ le flux binaire de la sous-bande haute sortant.

Ainsi, à partir des *N* flux codés reçus par le dispositif de mixage, une étape E801 de décodage des flux binaires de la sous-bande basse $Be_j^l$, $0 \leq j < N$ est effectuée pour obtenir *N* signaux $s_j^l$ de la sous-bande basse.

De même, à l'étape E805, N signaux de la sous-bande haute $s_j^h$ sont obtenus par décodage des flux binaires de la sous-bande haute $Be_j^h$, $0 \leq j < N$.

De façon à réaliser une détection d'une bande de fréquence prédéterminée sur les contenus audio des signaux ainsi décodés, une première étape E802 de calcul des énergies $E_j^l$ ($0 \leq j < N$) des signaux sous-bande basse décodés est effectuée.

Une étape E806 de calcul des énergies $E_j^h$ ($0 \leq j < N$) des signaux sous-bande haute décodés est également mise en oeuvre.

L'étape E807, effectue un calcul des différences entre les énergies des deux sous-bandes, dans le domaine logarithmique (dB) - ou de leurs rapports dans le domaine linéaire; $0 \leq j < N$.

Cette comparaison entre les énergies des deux sous-bandes permet de détecter la présence d'une bande de fréquence prédéterminée dans le contenu, par exemple une bande haute fréquence.

Ainsi, à l'étape E807, un ensemble H des voies d'entrée ayant du contenu HD est déterminé. On note $N^h$ le cardinal de l'ensemble H.

A l'étape E808, un mixage des flux décodés de l'ensemble H est effectué pour une transmission vers le terminal i.

Si i $\in$ H, alors le mixage se fait par addition de $N^h$ -1 signaux reconstruits de la sous-bande haute: $S_i^h = \Sigma s_j^h$ *avec* j $\in$ *H*-{i}.

Dans le cas contraire, ($i \notin H$) alors le mixage s'effectue par addition des $N^h$ signaux reconstruits de la sous-bande haute : $S_i^h = \Sigma s_j^h$ *avec* $j \in H$.

A l'étape E809, le flux binaire de sortie sous-bande haute ($Bs_i^h$) destiné à être transmis au terminal Ti est alors obtenu par codage par l'encodeur sous-bande haute du G.711.1 de ce signal somme $S_i^h$.

De même, à l'étape E803, l'addition de *N*-1 signaux reconstruits de la sous-bande basse est effectuée : $S_i^l = \Sigma s_j^l$ ; $0 \leq j < N, j \neq i$.

A l'étape E804, le flux binaire de sortie sous-bande basse $Bs_i^l$ destiné à être transmis au terminal Ti est alors obtenu par codage par l'encodeur sous-bande basse du G.711.1 de ce signal somme $S_i^l$.

Une étape de combinaison de ces deux flux mixés peut être effectuée avant transmission.

Par rapport à une recombinaison directe dans le domaine des signaux des sous-bandes décodés, l'invention en tenant compte de la présence ou non d'un contenu haute fréquence dans les flux à combiner permet de réduire la complexité des étapes E808 et E809.

En effet à l'étape 808, il n'y a que $N^h$+1 signaux somme à calculer : le signal $S^h$ étant commun aux sorties *i* telles que $i \notin H$. De plus le signal $S^h$ ne comporte que $N^h$ signaux et les $N^h$ signaux sommes $S_i^h$ des sorties *i* telles que $i \in H$ ne comportent que $N^h$-1 signaux.

De même à l'étape 809, le nombre de ré-encodage peut être réduit. Pour réduire davantage la complexité, on pourra comme dans l'état de l'art, éliminer les transformées MDCT nécessaires au ré-encodage des signaux combinées de la sous-bande haute (étape 809) en gardant en mémoire à l'étape E805, les signaux sous-bande haute dans le domaine MDCT et en effectuant les sommations de l'étape E808 dans le domaine MDCT.

Ainsi, bien que l'invention ait été illustrée dans des modes de réalisation dans les ponts à mixage, on comprendra qu'elle peut être mise en oeuvre dans tout dispositif devant combiner des flux de codeurs en sous-bandes. Par exemple, l'invention peut être avantageusement utilisée dans un terminal en communication multi-parties en architecture maillée ou en architecture centralisée utilisant un pont répliquant, pour réduire le nombre de décodage et de sommation.

Les **figures 9a et 9b** représentent des dispositifs de mixage 900a et 900b dans des exemples de réalisation de l'invention. Ces dispositifs mettent en oeuvre le procédé de mixage tel que décrit en référence à la figure 2 par les étapes principales E201 à E205.

Le dispositif 900a de la figure 9a peut être plus particulièrement associé à un pont centralisé tel qu'un pont de conférence dans un système de communication comportant une pluralité de terminaux. Le dispositif 900b de la figure 9b peut lui être plus particulièrement associé à un terminal ou passerelle de communication.

Matériellement, ces dispositifs comportent un processeur 930 coopérant avec un bloc mémoire BM comportant une mémoire de stockage et/ou de travail MEM.

Le processeur pilote des modules de traitement aptes à mettre en oeuvre le procédé selon l'invention. Ainsi, ces dispositifs comportent un module 902 de décodage d'une partie des flux codés sur au moins une première sous-bande de fréquence, un module 903 d'addition des flux ainsi décodés pour former un premier flux mixé. Il comporte également un module 901 de détection, sur au moins une deuxième sous-bande de fréquence différente de la au moins une première sous-bande, de présence d'une bande de fréquence prédéterminée dans la pluralité de flux audio codés. Le module 902 décode également des flux audio codés pour lesquels la présence de la bande de fréquence prédéterminée a été détectée, sur ladite au moins une deuxième sous-bande et le module 903 de mixage additionne également ces flux audio décodés pour former au moins un deuxième flux mixé.

Le bloc mémoire peut avantageusement comporter un programme informatique (prog.) comportant des instructions de code pour la mise en oeuvre des étapes du procédé de mixage au sens de l'invention, lorsque ces instructions sont exécutées par le processeur PROC et notamment les étapes de décodage d'une partie des flux codés sur au moins une première sous-bande de fréquence, d'addition des flux ainsi décodés pour former au moins un premier flux mixé, de détection, sur au moins une deuxième sous-bande de fréquence différente de la au moins une première sous-bande, de présence d'une bande de fréquence prédéterminée dans la pluralité de flux audio codés et d'addition des flux audio décodés pour lesquels la présence de la bande de fréquence prédéterminée a été détectée, sur la dite au moins une deuxième sous-bande pour former au moins un deuxième flux mixé.

Typiquement, la description de la figure 2 reprend les étapes d'un algorithme d'un tel programme informatique. Le programme informatique peut également être stocké sur un support mémoire lisible par un lecteur du dispositif ou téléchargeable dans l'espace mémoire de celui-ci.

La mémoire MEM enregistre de manière générale, toutes les données nécessaires à la mise en oeuvre du procédé de mixage.

Le dispositif 900a de la figure 9a comporte en outre un module 904 de codage apte à mettre en oeuvre les étapes E206a et E207a de la figure 2, pour obtenir les flux binaires de sortie des sous-bandes Bsi destinés à être transmis au terminal Ti via un module de sortie 906a.

Ce dispositif 900a comporte également un module d'entrée 905a apte à recevoir une pluralité de flux audio codés $N*Be_j$ en provenance par exemple des différents terminaux su système de communication, ces flux ayant été codés par un codeur en sous-bandes de fréquence.

Le dispositif 900b de la figure 9b comporte un module d'entrée 905b apte à recevoir une pluralité de flux audio codés $N*Be_j$ en provenance par exemple de différents canaux de communication, ces flux ayant été codés par un codeur en sous-bandes de fréquence.

Ce dispositif 900b comporte également un module de sortie 906b apte à transmettre au système de restitution du dispositif ou du terminal, le flux $S_{Mi}$ résultant de la combinaison des flux mixés par le module 903.

## Revendications

1. Procédé de mixage d'une pluralité de flux audio codés selon un codage en sous-bandes de fréquence, comportant les étapes suivantes:

   - décodage (E201) d'une partie des flux codés sur au moins une première sous-bande de fréquence;
   - addition (E202) des flux ainsi décodés pour former au moins un premier flux mixé;

   le procédé étant **caractérisé en ce qu'**il comporte les étapes de:

- détection (E203), sur au moins une deuxième sous-bande de fréquence différente de la au moins une première sous-bande, de présence d'une bande de fréquence prédéterminée dans la pluralité de flux audio codés;
- addition (E205) des flux audio décodés (E204) pour lesquels la présence de la bande de fréquence prédéterminée a été détectée, sur la dite au moins une deuxième sous-bande, pour former au moins un deuxième flux mixé.

2. Procédé selon la revendication 1, **caractérisé en ce qu'**il comprend en outre une étape de présélection des flux audio codés selon un critère prédeterminé, avant l'étape de détection.

3. Procédé selon la revendication 1, **caractérisé en ce qu'**il comporte en outre une étape de ré-encodage des flux mixés.

4. Procédé selon la revendication 1, **caractérisé en ce que** l'étape de décodage s'effectue sur des sous-bandes de fréquence basses et la bande de fréquence prédéterminée de l'étape de détection est une bande de fréquence supérieure auxdites sous-bandes de fréquence basses.

5. Procédé selon la revendication 1, **caractérisé en ce que** la présence d'une bande de fréquence prédéterminée dans un flux codé s'effectue par une comparaison d'énergie, dans les différentes sous-bandes de fréquence, des flux audio décodés.

6. Procédé selon la revendication 1, **caractérisé en ce que** la présence d'une bande de fréquence prédéterminée dans un flux codé s'effectue selon les étapes suivantes:

- détermination par sous-bande de fréquence d'un ensemble prédéterminé de sous-bandes, d'un signal estimé à partir du flux codé;
- détermination par sous-bande de fréquence de l'ensemble prédéterminé de sous-bandes, de paramètres non codés représentatifs du contenu audio, à partir du signal estimé correspondant;
- calcul d'au moins un critère local à partir des paramètres déterminés;
- décision quant à la présence d'une bande de fréquence prédéterminée dans au moins une sous-bande du contenu audio en fonction du au moins un critère local calculé.

7. Procédé selon la revendication 6, **caractérisé en ce qu'**au moins une partie des paramètres déterminés, représentatifs du contenu audio, est sauvegardée en mémoire pour une utilisation ultérieure lors du décodage des flux audio à mixer.

8. Procédé selon la revendication 1, **caractérisé en ce qu'**il comporte:

- plusieurs étapes de détection de bandes de fréquence prédéterminées dans des flux audio codés, la détection d'une première bande de fréquence prédéterminée dans une première sous-bande permettant d'obtenir un premier ensemble de flux audio codés, la détection d'une deuxième bande de fréquence prédéterminée dans une deuxième sous-bande permettant d'obtenir un deuxième ensemble de flux audio codés compris dans le premier ensemble; et
- des étapes d'addition de flux audio décodés pour chacun des ensembles de flux audio codés obtenus.

9. Dispositif de mixage d'une pluralité de flux audio codés selon un codage en sous-bandes de fréquence, comportant:

- un module (902) de décodage d'une partie des flux codés sur au moins une première sous-bande de fréquence;
- un module (903) d'addition des flux ainsi décodés pour former au moins un premier flux mixé;

le dispositif étant **caractérisé en ce qu'**il comporte en outre:

- un module (901) de détection, sur au moins une deuxième sous-bande de fréquence différente de la au moins une première sous-bande, de présence d'une bande de fréquence prédéterminée dans la pluralité de flux audio codés;
- un module (903) d'addition des flux audio décodés pour lesquels la présence de la bande de fréquence prédéterminée a été détectée, sur la dite au moins une deuxième sous-bande, pour former au moins un deuxième flux mixé.

**10.** Pont de conférence comportant un dispositif de mixage selon la revendication 9.

**11.** Terminal de communication comportant un dispositif de mixage selon la revendication 9.

**12.** Passerelle de communication comportant un dispositif de mixage selon la revendication 9.

**13.** Programme informatique comportant des instructions de code pour la mise en oeuvre des étapes du procédé de mixage selon l'une des revendications 1 à 8, lorsque ces instructions sont exécutées par un processeur.

**14.** Support de stockage lisible par un processeur, sur lequel est stocké un programme informatique comprenant des instructions de code pour l'exécution des étapes du procédé de mixage selon l'une des revendications 1 à 8.

**Patentansprüche**

**1.** Verfahren zum Mischen von mehreren gemäß einer Codierung in Frequenzunterbänder codierten Audioströmen, das die folgenden Schritte aufweist:

- Decodieren (E201) eines Teils der codierten Ströme auf mindestens einem ersten Frequenzunterband;
- Addieren (E202) der auf diese Weise decodierten Ströme, um mindestens einen ersten gemischten Strom zu bilden;

wobei das Verfahren **dadurch gekennzeichnet ist, dass** es die folgenden Schritte aufweist:

- Erkennen (E203) auf mindestens einem zweiten Frequenzunterband, das sich von dem mindestens einen ersten Unterband unterscheidet, der Anwesenheit eines vorbestimmten Frequenzbandes unter den mehreren codierten Audioströmen;
- Addieren (E205) der decodierten Audioströme (E204), für die die Anwesenheit des vorbestimmten Frequenzbandes auf dem mindestens einen zweiten Unterband erkannt worden ist, um mindestens einen zweiten gemischten Strom zu bilden.

**2.** Verfahren nach Anspruch 1, **dadurch gekennzeichnet, dass** es ferner einen Schritt des Vorauswählens der codierten Audioströme nach einem vorbestimmten Kriterium vor dem Schritt des Erkennens aufweist.

**3.** Verfahren nach Anspruch 1, **dadurch gekennzeichnet, dass** es ferner einen Schritt des Rückcodierens der gemischten Ströme aufweist.

**4.** Verfahren nach Anspruch 1, **dadurch gekennzeichnet, dass** der Schritt des Decodierens auf Niederfrequenzunterbändern durchgeführt wird und das vorbestimmte Frequenzband des Schrittes des Erkennens ein höheres Frequenzband als die Niederfrequenzunterbänder ist.

**5.** Verfahren nach Anspruch 1, **dadurch gekennzeichnet, dass** die Anwesenheit eines vorbestimmten Frequenzbandes in einem codierten Strom durch einen Energievergleich der decodierten Audioströme in den verschiedenen Frequenzunterbändern erfolgt.

**6.** Verfahren nach Anspruch 1, **dadurch gekennzeichnet, dass** die Anwesenheit eines vorbestimmten Frequenzbandes in einem codierten Strom nach den folgenden Schritten erfolgt:

- Bestimmen pro Frequenzunterband von einer vorbestimmten Gruppe von Unterbändern von einem Signal, das ausgehend von dem codierten Strom geschätzt wird;
- Bestimmen pro Frequenzunterband der vorbestimmten Gruppe von Unterbändern von nicht codierten Parametern, die für den Audioinhalt repräsentativ sind, ausgehend von dem entsprechenden geschätzten Signal;
- Berechnen von mindestens einem lokalen Kriterium ausgehend von den bestimmten Parametern;
- Entscheiden über die Anwesenheit eines vorbestimmten Frequenzbandes in mindestens einem Unterband des Audioinhalts in Abhängigkeit von dem mindestens einen berechneten lokalen Kriterium.

**7.** Verfahren nach Anspruch 6, **dadurch gekennzeichnet, dass** mindestens ein Teil der bestimmten Parameter, die für den Audioinhalt repräsentativ sind, für eine spätere Verwendung während des Decodierens der Audioströme durch einen Mixer im Speicher gespeichert wird.

**8.** Verfahren nach Anspruch 1, **dadurch gekennzeichnet, dass** es Folgendes aufweist:

- mehrere Schritte des Erkennens von vorbestimmten Frequenzbändern in den codierten Audioströmen, wobei das Erkennen von einem ersten vorbestimmten Frequenzband in einem ersten Unterband ermöglicht, eine erste Gruppe von codierten Audioströmen zu erhalten, wobei das Erkennen von einem zweiten vorbestimmten Frequenzband in einem zweiten Unterband ermöglicht, eine zweite Gruppe von codierten Audioströmen zu erhalten, die in der ersten Gruppe enthalten sind; und
- Schritte des Addierens von decodierten Audioströmen für jede der Gruppen von erhaltenen codierten Audioströmen.

**9.** Vorrichtung zum Mischen von mehreren gemäß einer Codierung in Frequenzunterbänder codierten Audioströmen, umfassend:

- ein Modul (902) zum Decodieren eines Teils der codierten Ströme auf mindestens einem ersten Frequenzunterband;
- ein Modul (903) zum Addieren der auf diese Weise decodierten Ströme, um mindestens einen ersten gemischten Strom zu bilden;

wobei die Vorrichtung **dadurch gekennzeichnet ist, dass** sie ferner Folgendes aufweist:

- ein Modul (901) zum Erkennen auf mindestens einem zweiten Frequenzunterband, das sich von dem mindestens einen ersten Unterband unterscheidet, der Anwesenheit eines vorbestimmten Frequenzbandes unter den mehreren codierten Audioströmen;
- ein Modul (903) zum Addieren der decodierten Audioströme, für die die Anwesenheit des vorbestimmten Frequenzbandes auf dem mindestens einen zweiten Unterband erkannt worden ist, um mindestens einen zweiten gemischten Strom zu bilden.

**10.** Konferenzschaltung, umfassend eine Vorrichtung zum Mischen nach Anspruch 9.

**11.** Kommunikationsendgerät, umfassend eine Vorrichtung zum Mischen nach Anspruch 9.

**12.** Kommunikations-Gateway, umfassend eine Vorrichtung zum Mischen nach Anspruch 9.

**13.** Computerprogramm, umfassend Code-Anweisungen zum Umsetzen der Schritte des Verfahrens zum Mischen nach einem der Ansprüche 1 bis 8, wenn diese Anweisungen von einem Prozessor ausgeführt werden.

**14.** Prozessorlesbares Speichermedium, auf dem ein Computerprogramm gespeichert ist, das Code-Anweisungen zum Ausführen der Schritte des Verfahrens zum Mischen nach einem der Ansprüche 1 bis 8 aufweist.

## Claims

**1.** Method for mixing a plurality of coded audio streams according to a coding by frequency subbands, comprising the following steps:

- decoding (E201) of a part of the coded streams over at least a first frequency sub-band;
- summing (E202) of the streams thus decoded so as to form at least a first mixed stream;

the method being **characterized in that** it comprises the steps for:

- detection (E203), over at least a second frequency sub-band different from the at least first sub-band, of the presence of a predetermined frequency band within the plurality of coded audio streams;
- summing (E205) of the decoded audio streams (E204) for which the presence of the predetermined frequency band has been detected, over said at least second sub-band, so as to form at least a second mixed stream.

**2.** Method according to Claim 1, **characterized in that** it furthermore comprises a step for pre-selection of the coded audio streams according to a predetermined criterion, prior to the detection step.

**3.** Method according to Claim 1, **characterized in that** it furthermore comprises a step of re-coding the mixed streams.

**4.** Method according to Claim 1, **characterized in that** the decoding step is carried out over low frequency sub-bands and the predetermined frequency band for the detection step is a frequency band higher than said low frequency sub-bands.

**5.** Method according to Claim 1, **characterized in that** the presence of a predetermined frequency band within a coded stream is detected by a comparison of energy, within the various frequency sub-bands, of the decoded audio streams.

**6.** Method according to Claim 1, **characterized in that** the presence of a predetermined frequency band within a coded stream is detected according to the following steps:

- determination, by frequency sub-band from a predetermined set of sub-bands, of a estimated signal based on the coded stream;
- determination, by frequency sub-band from the predetermined set of sub-bands, of uncoded parameters representative of the audio content, based on the corresponding estimated signal;
- calculation of at least one local criterion using the determined parameters;
- decision with respect to the presence of a predetermined frequency band within at least one sub-band of the audio content as a function of the at least one local criterion calculated.

**7.** Method according to Claim 6, **characterized in that** at least a part of the determined parameters, representative of the audio content, is saved in memory for a later use during the decoding of the audio streams to be mixed.

**8.** Method according to Claim 1, **characterized in that** it comprises:

- several steps for detection of predetermined frequency bands within coded audio streams, the detection of a first predetermined frequency band within a first sub-band allowing a first set of coded audio streams to be obtained, the detection of a second predetermined frequency band within a second sub-band allowing a second set of coded audio streams to be obtained included in the first set; and
- steps for summation of decoded audio streams for each of the sets of coded audio streams obtained.

**9.** Device for mixing a plurality of coded audio streams according to a frequency sub-band coding, comprising:

- a module (902) for decoding a part of the coded streams over at least a first frequency sub-band;
- a module (903) for summing the streams thus decoded so as to form at least a first mixed stream;

the device being **characterized in that** it furthermore comprises:

- a module (901) for detection, over at least a second frequency sub-band different from the at least first sub-band, of the presence of a predetermined frequency band within the plurality of coded audio streams;
- a module (903) for summing the decoded audio streams for which the presence of the predetermined frequency band has been detected, over said at a second sub-band, so as to form at least a second mixed stream.

**10.** Conference bridge comprising a mixing device according to Claim 9.

**11.** Communications terminal comprising a mixing device according to Claim 9.

**12.** Communications gateway comprising a mixing device according to Claim 9.

**13.** Computer program comprising code instructions for the implementation of the steps of the method of mixing according to one of Claims 1 to 8, when these instructions are executed by a processor.

**14.** Storage media readable by a processor, on which a computer program is stored comprising code instructions for the execution of the steps of the method of mixing according to one of Claims 1 to 8.

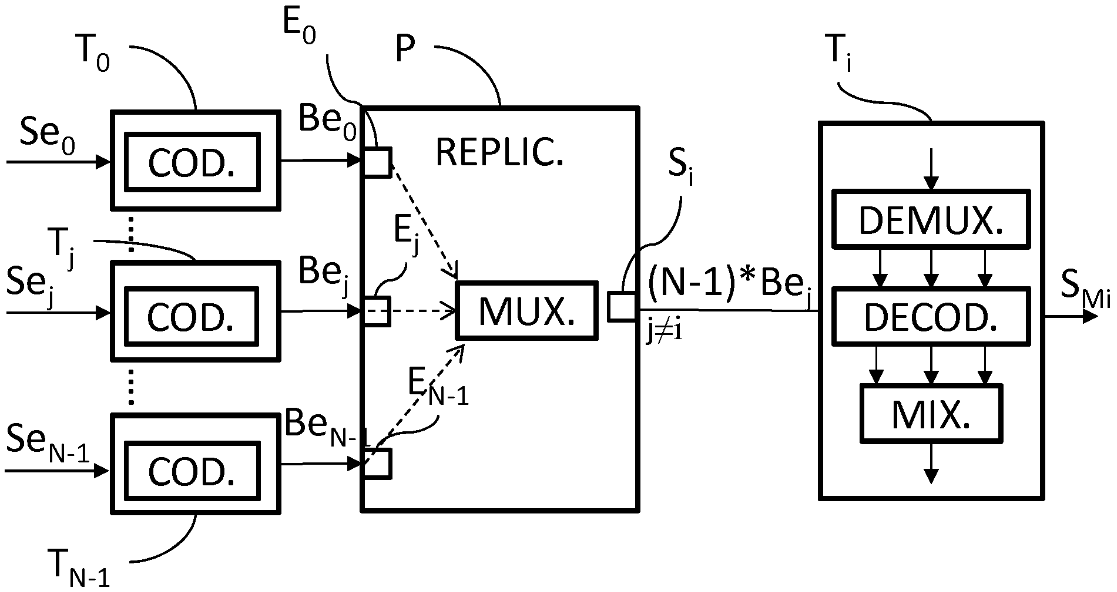


**Fig.1a (Etat de l'art)**

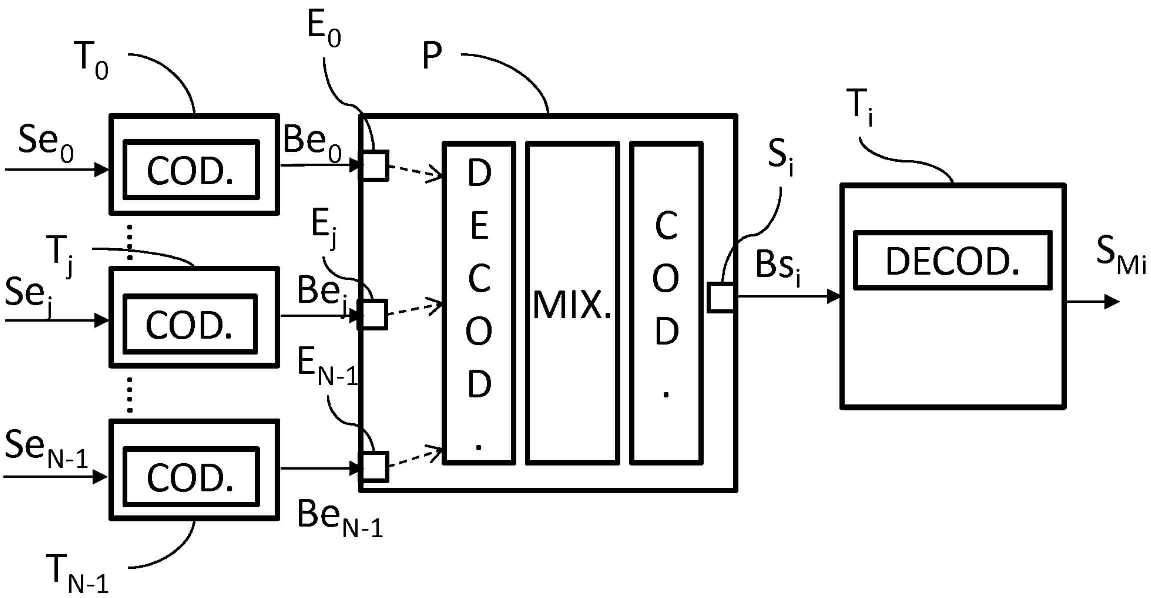


**Fig.1b (Etat de l'art)**

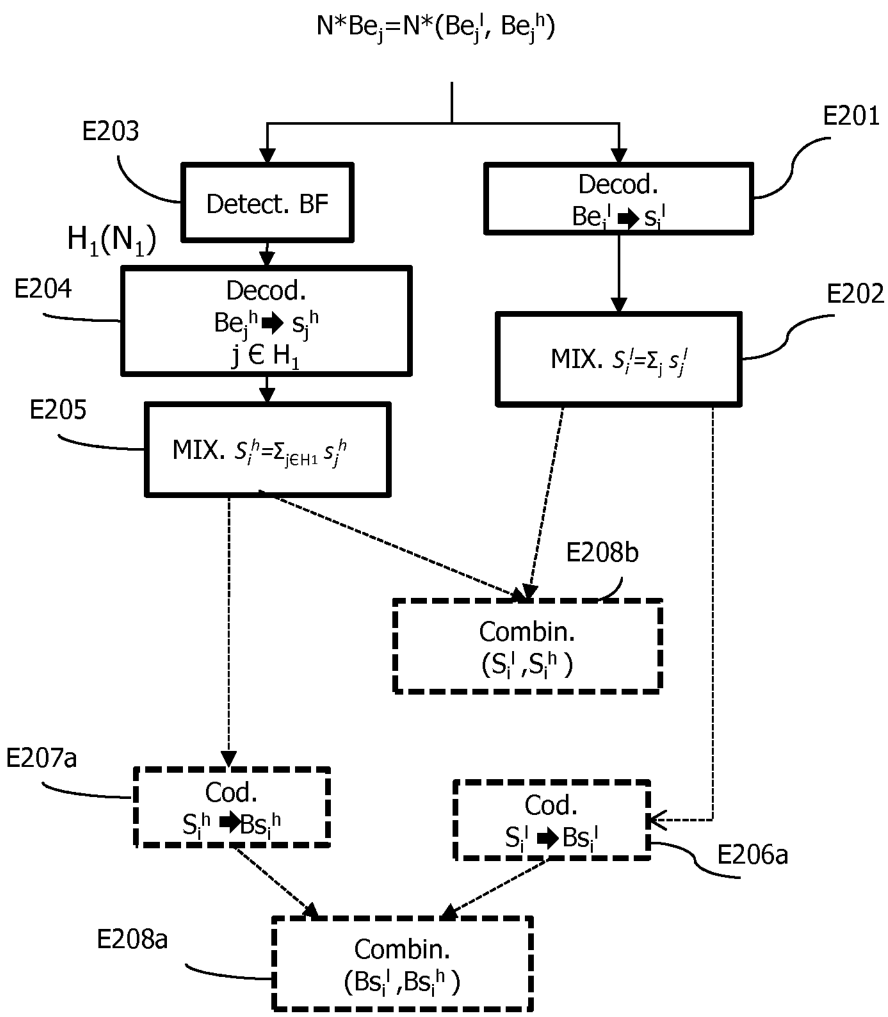
N*Bej=N*(Bej^l, Bej^h)
E203
Detect. BF
E201
Decod.
Bej^l ➡ sj^l
H1(N1)
E204
Decod.
Bej^h ➡ sj^h
j Є H1
E202
MIX. Si^l=Σj sj^l
E205
MIX. Si^h=Σj∈H1 sj^h
E208b
Combin.
(Si^l ,Si^h )
E207a
Cod.
Si^h ➡Bsi^h
Cod.
Si^l ➡ Bsi^l
E206a
E208a
Combin.
(Bsi^l ,Bsi^h )

Fig.2

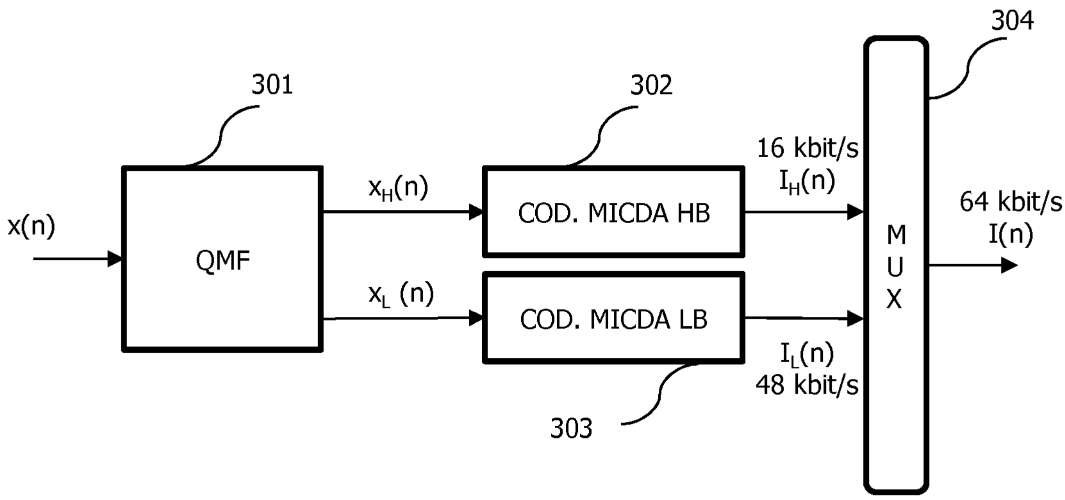
301
302
303
304
x(n)
QMF
$x_H(n)$
$x_L$ (n)
COD. MICDA HB
COD. MICDA LB
16 kbit/s
$I_H(n)$
$I_L(n)$
48 kbit/s
M
U
X
64 kbit/s
I(n)

**Fig.3**

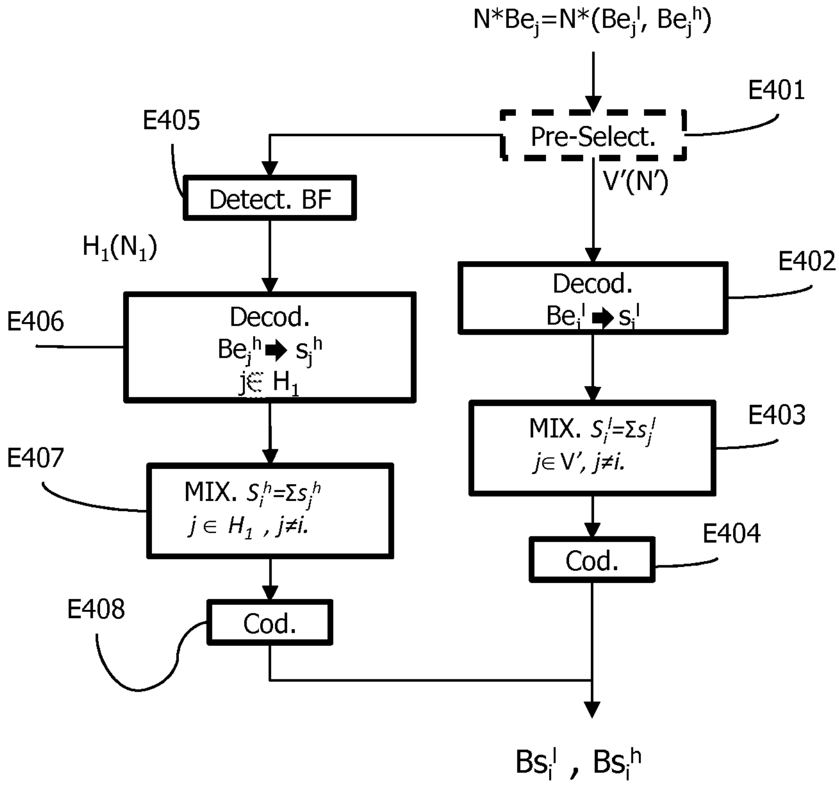
$N*Be_j=N*(Be_j^l, Be_j^h)$
E401
Pre-Select.
V'(N')
E405
Detect. BF
$H_1(N_1)$
E402
Decod.
$Be_i^l$ ➡ $s_i^l$
E406
Decod.
$Be_j^h$ ➡ $s_j^h$
$j \in H_1$
E403
MIX. $S_i^l=\Sigma s_j^l$
$j \in V', j \neq i.$
E407
MIX. $S_i^h=\Sigma s_j^h$
$j \in H_1 , j \neq i.$
E404
Cod.
E408
Cod.
$Bs_i^l$ , $Bs_i^h$

**Fig.4**

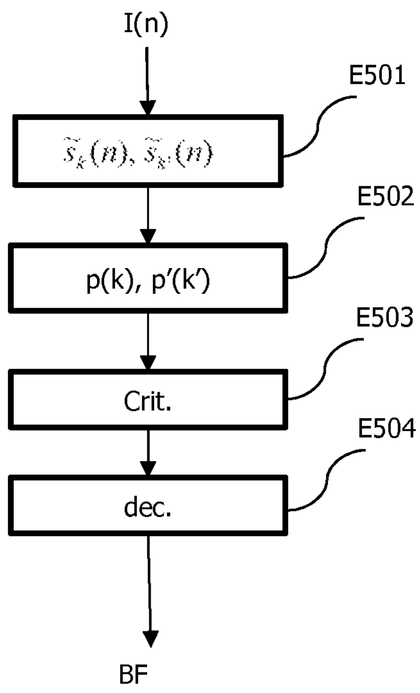


Fig.5

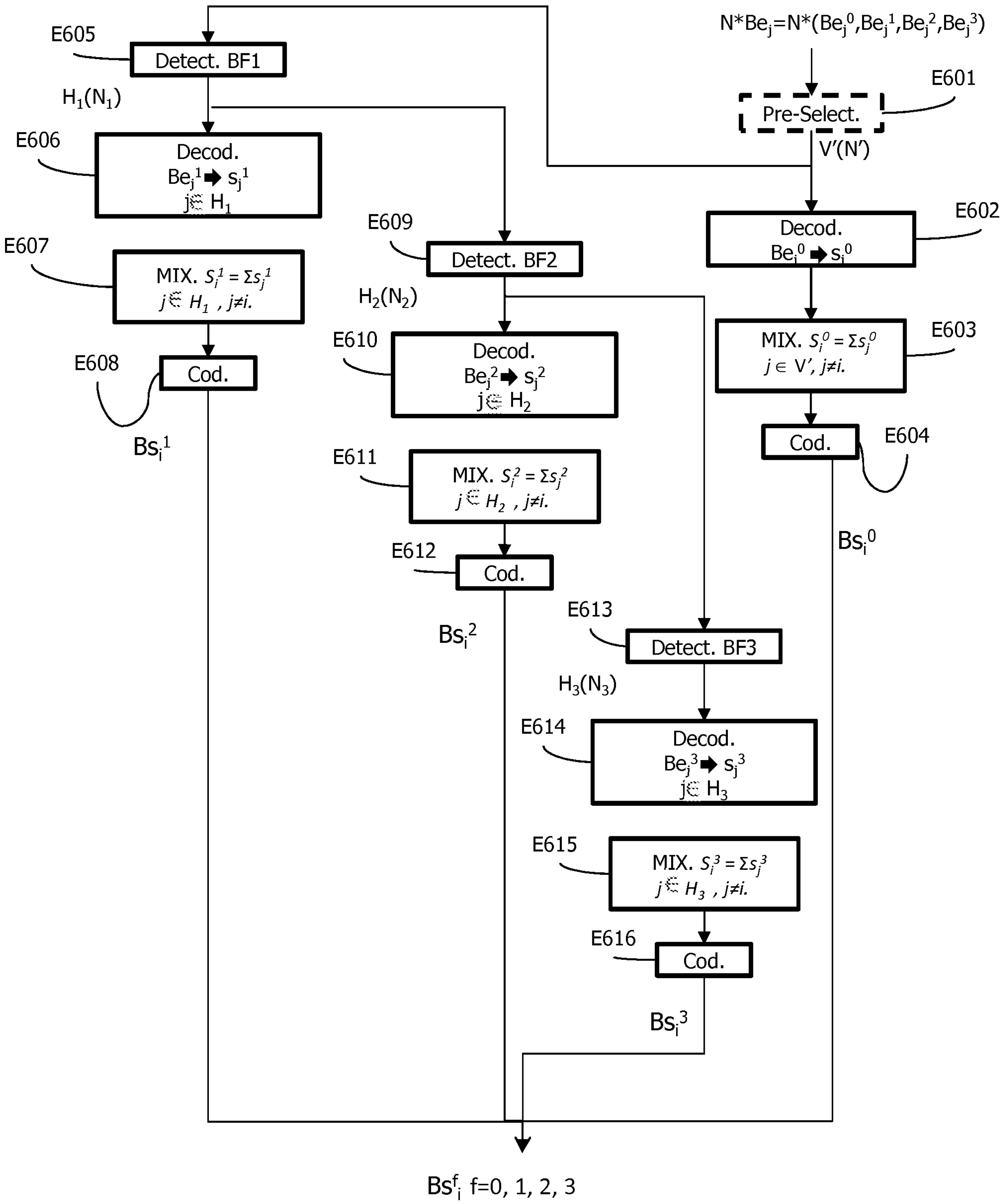

N*Bej=N*(Bej0,Bej1,Bej2,Bej3)
E601
Pre-Select.
V'(N')
E602
Decod.
Bej0 ➡ sj0
E603
MIX. Si0 = Σsj0
j ∈ V', j≠i.
E604
Cod.
Bsi0
E605
Detect. BF1
H1(N1)
E606
Decod.
Bej1 ➡ sj1
j∈ H1
E607
MIX. Si1 = Σsj1
j∈ H1 , j≠i.
E608
Cod.
Bsi1
E609
Detect. BF2
H2(N2)
E610
Decod.
Bej2 ➡ sj2
j∈ H2
E611
MIX. Si2 = Σsj2
j∈ H2 , j≠i.
E612
Cod.
Bsi2
E613
Detect. BF3
H3(N3)
E614
Decod.
Bej3 ➡ sj3
j∈ H3
E615
MIX. Si3 = Σsj3
j∈ H3 , j≠i.
E616
Cod.
Bsi3
Bsfi f=0, 1, 2, 3


**Fig.6**

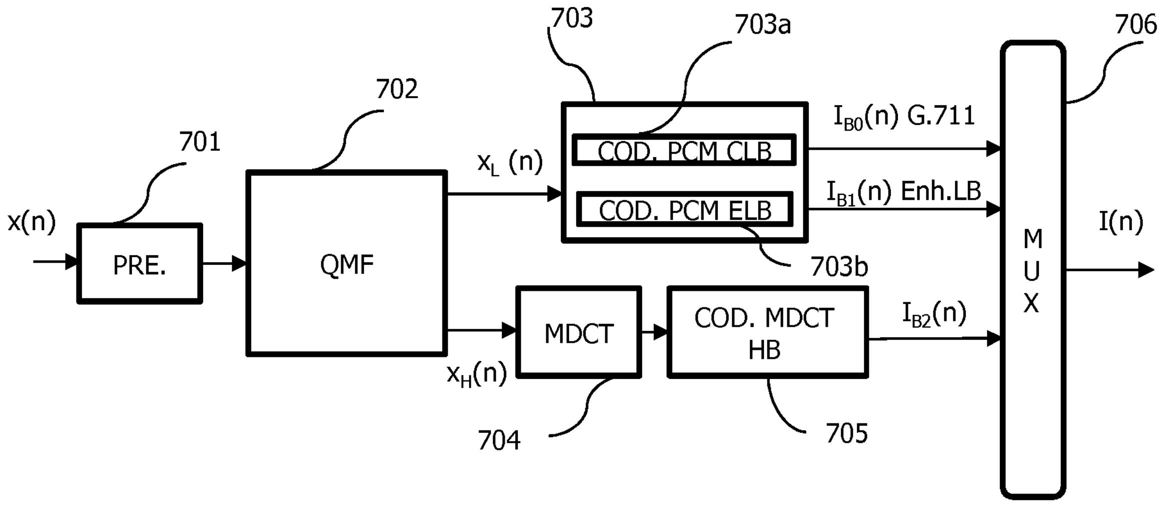

703
703a
706
702
701
x(n)
PRE.
QMF
$x_L$ (n)
COD. PCM CLB
COD. PCM ELB
$I_{B0}$(n) G.711
$I_{B1}$(n) Enh.LB
703b
M U X
I(n)
MDCT
COD. MDCT HB
$I_{B2}$(n)
$x_H$(n)
704
705


**Fig.7**

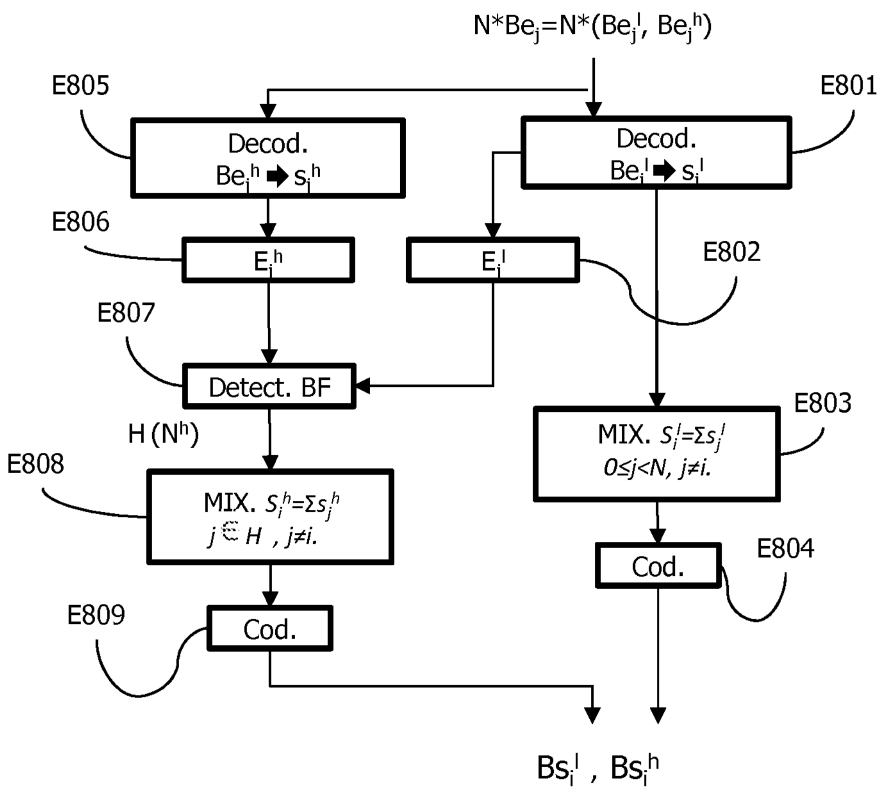

$N*Be_j=N*(Be_j^l, Be_j^h)$
E805
E801
Decod. $Be_j^h \Rightarrow s_j^h$
Decod. $Be_j^l \Rightarrow s_j^l$
E806
$E_j^h$
$E_j^l$
E802
E807
Detect. BF
H ($N^h$)
E803
E808
MIX. $S_i^h=\Sigma s_j^h$ $j \in H$, $j\neq i$.
MIX. $S_i^l=\Sigma s_j^l$ $0\leq j<N$, $j\neq i$.
E804
Cod.
E809
Cod.
$Bs_i^l$ , $Bs_i^h$


**Fig.8**

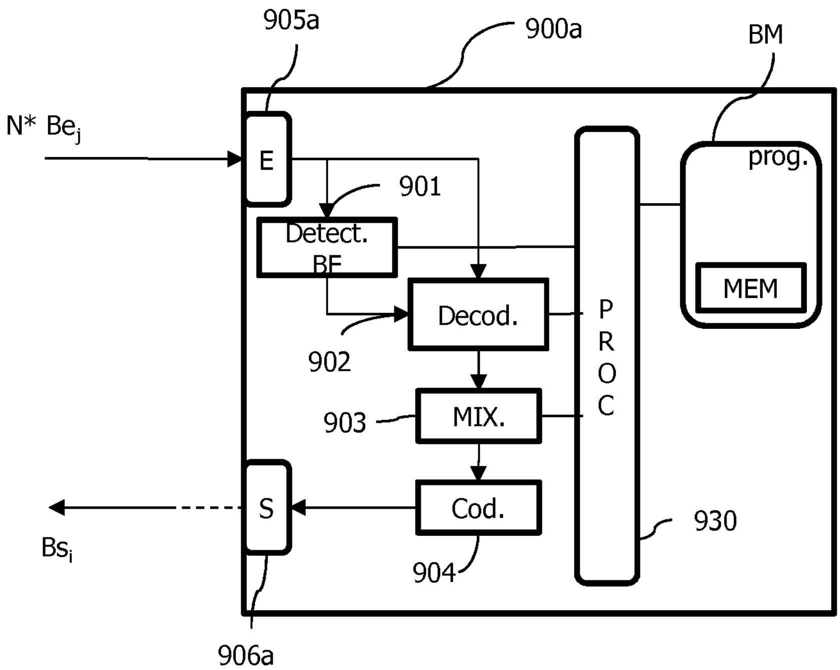
905a
900a
BM
N* $Be_j$
E
prog.
901
Detect. BF
MEM
Decod.
P R O C
902
903
MIX.
S
Cod.
930
$Bs_i$
904
906a

Fig.9a

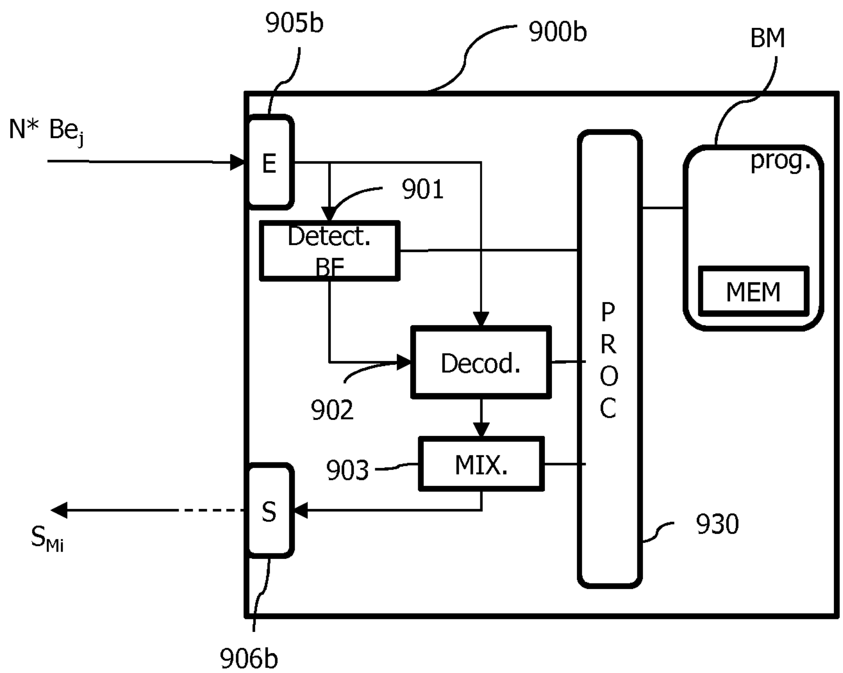
905b
900b
BM
N* $Be_j$
E
prog.
901
Detect. BF
MEM
Decod.
P R O C
902
903
MIX.
S
$S_{Mi}$
930
906b

Fig.9b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 7619995 B1
- FR 1152596

### Littérature non-brevet citée dans la description


- **SMITH, P.J. ; KABAL, P. ; BLOSTEIN M.L. ; RABIPOUR, R.** Tandem-free VoIP conferencing: a bridge to next-generation networks. *IEEE Communications Magazine,* Mai 2003, vol. 41 (5
- **J. LENNOX ; E. IVOV ; E. MAROCCO.** A Real-time Transport Protocol (RTP) Header Extension for Client-to-Mixer Audio Level Indication. *RFC 6464,* Décembre 2011
- Rec. ITU-T G.722, 7 kHz audio-coding within 64 kbit/s, Sep. 2012. *Rec. IUT-T G.711.1, Wideband embedded extension for G.711 pulse code modulation,* 2008
- **VALIN, JM. ; VOS, K. ; T. TERRIBERRY.** Definition of the Opus Audio Codec. *RFC 6716,* Septembre 2012
- **LIAOYU CHANG ; XIAOQING YU ; HAIYING TAN ; WANGGEN WAN.** Research and Application of Audio Feature in Compressed Domain. IET Conference on Wireless, Mobile and Sensor Networks, 2007, 2007, 390-393
- **A. CHARBONNIER ; J. P. PETIT.** Sub-band ADPCM coding for high quality audio signals. *ICASSP,* 1988, 2540-2543